# EUROPÄISCHE PATENTSCHRIFT

(11) **EP 3 924 170 B1**
(45) Veröffentlichungstag und Bekanntmachung des Hinweises auf die Patenterteilung: **10.06.2026**
(21) Anmeldenummer: 20706654.9
(22) Anmeldetag: 14.02.2020
(51) Int. Cl.: B22F 10/68, B22F 3/24, B33Y 40/20

(54) **VERFAHREN UND REINIGUNGSSYSTEM ZUM REINIGEN DREIDIMENSIONALER OBJEKTE**
METHOD AND CLEANING SYSTEM FOR CLEANING THREE-DIMENSIONAL OBJECTS
PROCEDE ET SYSTEME DE NETTOYAGE POUR LE NETTOYAGE D'OBJETS TRIDIMENSIONNELS

(30) Priorität: 14.02.2019 DE 102019103816
(43) Veröffentlichungstag der Anmeldung: 22.12.2021
(73) Patentinhaber: Rapid Shape GmbH, 71296 Heimsheim (DE)
(72) Erfinder: SCHULTHEISS, Andreas, 75417 Mühlacker (DE); GEITNER, Andreas, 71229 Leonberg (DE)
(74) Vertreter: Hoeger, Stellrecht & Partner Patentanwälte mbB
(86) Internationale Anmeldenummer: PCT/EP2020/053944
(87) Internationale Veröffentlichungsnummer: WO 2020/165430

(56) Entgegenhaltungen:
- WO-A1-2014/177823
- WO-A1-2018/111548
- DE-A1- 102011 002 954
- DE-A1- 102012 014 838
- DE-A1- 102013 000 511
- US-A1- 2002 090 410
- US-A1- 2011 133 451
- US-A1- 2012 195 994
- US-A1- 2016 279 680
- US-B2- 9 878 498

## Beschreibung

Die vorliegende Erfindung betrifft ein Reinigungssystem zum Reinigen mindestens eines dreidimensionalen Objekts.

Ferner betrifft die vorliegende Erfindung ein Verfahren zum Reinigen mindestens eines dreidimensionalen Objekts.

Vorrichtungen zum Herstellen dreidimensionaler Objekte durch Verfestigen eines unter Einwirkung von Strahlung verfestigbaren Materials gewinnen zunehmend an Bedeutung. Sie sind insbesondere als sogenannte 3D-Drucker bekannt, mit denen Gegenstände individuell, schnell und hochpräzise hergestellt werden können. Derartige Vorrichtungen kommen insbesondere im Dentalbereich zum Einsatz. Ausführungsbeispiele derartiger Vorrichtungen sind beispielsweise in der DE 10 2013 107 571 A1 beschrieben.

Ein Problem bei der Herstellung dreidimensionaler Objekte in der beschriebenen Weise ist insbesondere, dass diese nach der Fertigstellung, also nach dem Aushärten, beim Entnehmen aus der Vorrichtung, also dem 3D-Drucker, noch mit dem verfestigbaren Material kontaminiert sind. Bei diesem handelt es sich insbesondere um flüssige Kunststoffe, insbesondere Harze oder Polymerlösungen, die teilweise als Sondermüll entsorgt werden müssen, wenn sie nicht ausgehärtet sind.

Es versteht sich von selbst, dass beim Entnehmen hergestellter dreidimensionaler Objekte aus einem solchen 3D-Drucker eine Kontamination einer Bedienperson nahezu unvermeidlich ist. Ferner sind am Markt keine Lösungen verfügbar, die eine einfache Reinigung der dreidimensionalen Objekte nach deren Herstellung ermöglichen, um diese von nicht verfestigtem verfestigbarem Materialien zu befreien.

In der WO 2018/111548 A1 sind Verfahren und Vorrichtungen zum Waschen von stereolithographisch hergestellten Objekten beschrieben. Verfahren und Vorrichtungen zum Herstellen dreidimensionaler Objekte aus mehreren verfestigbaren Materialien sind aus der US 2012/0195994 A1 bekannt. Die DE 10 2012 014 838 A1 offenbart eine Vorrichtung zur Herstellung dreidimensionaler Objekte. Aus der US 2002/0090410 A1 ist eine Vorrichtung zum Entfernen von pulverförmigem Material und ein System zum Ausbilden von dreidimensionalen Objekten bekannt. In den US 2016/0279680 A1, US9878498B2 und WO2014177823A1 sind eine Reinigungsvorrichtung, Reinigungsverfahren und Aufnahmebehälter für Reinigungsfluide offenbart.

Es ist daher eine Aufgabe der vorliegenden Erfindung, ein Verfahren und ein Reinigungssystem zum Reinigen mindestens eines dreidimensionalen Objekts, welches durch Verfestigen, insbesondere schichtweise oder kontinuierlich, eines unter Einwirkung von Strahlung verfestigbaren Materials ausgebildet ist, zu verbessern.

Diese Aufgabe wird erfindungsgemäß durch ein Reinigungssystem gemäß Anspruch 1 gelöst.

Das erfindungsgemäß vorgeschlagene Reinigungssystem ermöglicht auf einfache Weise insbesondere eine automatische Reinigung dreidimensionaler Objekte, die beispielsweise durch den beschriebenen 3D-Druck aus einem flüssigen verfestigbaren Material ausgebildet wurden. Reinigungsmittel kann mittels der mindestens einen Fördereinrichtung automatisch aus einem Reinigungsmittelbehälter in die Reinigungskammer gefördert werden, wo das Reinigungsmittel nicht verfestigtes verfestigbares Material vom dreidimensionalen Objekt abspült oder ablöst, um dieses vollständig oder im Wesentlichen vollständig von nicht verfestigtem verfestigbarem Material zu befreien. Ist die Reinigungsprozedur, nachfolgend auch als Reinigungsgang bezeichnet, abgeschlossen, kann mit der Fördereinrichtung das Reinigungsmittel wieder zurück in den Reinigungsmittelbehälter gefördert werden. Der Reinigungsmittelbehälter, mit dem das unkontaminierte Reinigungsmittel bereitgestellt wurde, dient somit zur Aufnahme des kontaminierten Reinigungsmittels nach Durchführung eines Reinigungsgangs. Das so kontaminierte, also mindestens einmal genutzte Reinigungsmittel kann nun auf einfache Weise entsorgt werden, und zwar mit dem Reinigungsmittelbehälter. Das Reinigungssystem ermöglicht insbesondere eine Reinigung dreidimensionaler Objekte, ohne dass eine Bedienperson mit dem Reinigungsmittel direkt in Kontakt kommen muss. Zudem kann die Reinigungsprozedur vollständig automatisiert werden, also insbesondere das Fördern des Reinigungsmittels vom Reinigungsmittelbehälter in die Reinigungskammer hinein und aus dieser wieder zurück in den Reinigungsmittelbehälter. Optional beziehungsweise alternativ ist es selbstverständlich auch möglich das kontaminierte, also mindestens einmal genutzte Reinigungsmittel in einen anderen bereitgestellten Entsorgungsbehälter zu fördern. Dies kann insbesondere vorteilhaft sein, um Verwechslungen zwischen Behältern zu vermeiden, die unkontaminiertes und kontaminiertes Reinigungsmittel enthalten. Die mindestens eine Fördereinrichtung kann insbesondere in Form einer Fluidpumpe ausgebildet sein, um flüssige Reinigungsmittel aus Reinigungsmittelbehältern in die Reinigungskammer zu fördern und wieder zurück. Unkontaminiertes Reinigungsmittel in diesem Sinne kann insbesondere Reinigungsmittel sein, das frei von jeglicher Kontamination mit nicht verfestigtem verfestigbarem Material ist. Derartiges Reinigungsmittel wurde also noch nie zum Reinigen dreidimensionaler Objekte von nicht verfestigtem verfestigbarem Material eingesetzt. Kontaminiertes Reinigungsmittel in diesem Sinne kann insbesondere Reinigungsmittel sein, das mit nicht verfestigtem verfestigbarem Material kontaminiert ist, also derartiges Material bereits enthält. Unkontaminiertes Reinigungsmittel im weiteren Sinne kann jedoch auch Reinigungsmittel sein, dessen Kontaminationsgrad kleiner ist als der Kontaminationsgrad des kontaminierten Reinigungsmittels. Es kann also beispielsweise schwach kontaminiertes Reinigungsmittel als "unkontaminiertes" Reinigungsmittel genutzt werden, um eine Reinigungsprozedur beziehungsweise einen Reinigungsvorgang in der Reinigungskammer durchzuführen. Dabei nimmt der Kontaminationsgrad von nicht verfestigtem verfestigbarem Material im Reinigungsmittel zu. Nach der Reinigungsprozedur ist es "kontaminiert", weist also einen höheren Kontaminationsgrad von nicht verfestigtem verfestigbarem Material auf als vor der Reinigungsprozedur. Um den Verbrauch an Reinigungsmittel zu begrenzen, kann insbesondere auch "kontaminiertes" Reinigungsmittel wiederum als "unkontaminiertes" Reinigungsmittel eingesetzt werden. Dies ist insbesondere auch mehrfach möglich, und zwar zum Beispiel so lange bis ein Kontaminationsgrad von nicht verfestigtem verfestigbarem Material im "kontaminierten" Reinigungsmittel, also nach einem Reinigungsvorgang, so hoch ist, dass es nicht mehr zum Reinigen genutzt werden kann beziehungsweise benutzt werden sollte. Gemäß der Erfindung ist ferner vorgesehen, dass das Reinigungssystem eine Bewegungseinrichtung umfasst, zum Bewegen des Reinigungsmittels in der Reinigungskammer. Die Bewegungseinrichtung kann insbesondere in Form einer Umwälzeinrichtung ausgebildet sein, um durch Bewegen des Reinigungsmittels in der Reinigungskammer das Entfernen von nicht verfestigtem verfestigbarem Material vom dreidimensionalen Objekt möglichst vollständig zu erreichen. Günstig ist es, dass die Bewegungseinrichtung eine Rühreinrichtung und/oder eine strömungsmechanische Fluidstrahlerzeugungseinrichtung mit mindestens einer Düse zum Bewegen des Reinigungsmittels umfasst. Die Bewegungseinrichtung ist erfindungsgemäß ausgebildet zum Erzeugen einer turbulenten Strömung in der mit Reinigungsmittel befüllten Reinigungskammer. Eine derartig ausgebildete Bewegungseinrichtung ermöglicht es insbesondere, das zu reinigende dreidimensionale Objekt mit dem Reinigungsmittel mit einer relativ hohen Geschwindigkeit anzuströmen, um ein optimales Abspülen und Ablösen des am Objekt anhaftenden verfestigbaren Materials zu erreichen. Die Rühreinrichtung kann insbesondere nach Art eines Magnetrührers ausgebildet sein. Insbesondere um turbulente Strömungen erzeugen zu können, kann die Rühreinrichtung ein oder mehrere propellerartige Rührelemente umfassen. Ein Antrieb von Rührelementen der Rühreinrichtung kann insbesondere durch eine magnetische Kopplung durch eine Wand der Reinigungskammer erreicht werden, sodass keine Durchführungen an der Reinigungskammer abgedichtet werden müssen in Verbindung mit der Rühreinrichtung.

Vorteilhaft ist es, wenn die Reinigungskammer einen Boden aufweist, wenn in der Reinigungskammer vom Boden beabstandet ein Trägerelement für das mindestens eine zu reinigende dreidimensionale Objekt angeordnet oder ausgebildet ist und wenn das Trägerelement fluiddurchlässig ausgebildet ist. Eine derartige Ausgestaltung der Reinigungskammer mit einem Trägerelement ermöglicht insbesondere, dass zu reinigende dreidimensionale Objekt zuverlässig von allen Seiten mit dem Reinigungsmittel umspülen zu können. Zudem ermöglicht es die beabstandete Anordnung des Trägerelements vom Boden der Reinigungskammer, zwischen dem Trägerelement und dem Boden optionale Komponenten des Reinigungssystems anzuordnen, die nicht mit dem zu reinigenden Objekt in Kontakt kommen sollen. Das Trägerelement kann insbesondere in Form eines Metallnetzes oder eines Metall- oder Kunststoffgitters ausgebildet sein. Das Trägerelement ist vorzugsweise aus einem Material ausgebildet, das von den Reinigungsmitteln, die beim Reinigungssystem eingesetzt werden, nicht angegriffen wird. Beispielsweise kann das Trägerelement aus einem Edelstahl ausgebildet sein.

Auf einfache Weise lässt sich die Reinigungskammer fluidwirksam mit der Fördereinrichtung verbinden, wenn die Reinigungskammer einen Reinigungsmitteleinlass aufweist, der fluidwirksam mit der mindestens einen Fördereinrichtung verbunden ist.

Günstigerweise ist der Reinigungsmitteleinlass am Boden der Reinigungskammer angeordnet. Eine solche Anordnung des Reinigungsmitteleinlasses hat insbesondere den Vorteil, dass beim Entleeren der Reinigungskammer, also insbesondere beim Zurückfördern von kontaminiertem Reinigungsmittel in den Reinigungsbehälter zurück, eine vollständige oder im Wesentlichen vollständige Entleerung der Reinigungskammer möglich ist. Insbesondere können so Totvolumina vermieden werden. Zudem kann das kontaminierte Reinigungsmittel mit Schwerkraftunterstützung durch den Reinigungsmitteleinlass am Boden ausströmen.

Um ein Entleeren der Reinigungskammer weiter zu verbessern, ist es günstig, wenn der Boden trichterförmig ausgebildet ist und wenn der Reinigungsmitteleinlass am in Schwerkraftrichtung tiefsten Punkt oder Bereich der Reinigungskammer angeordnet oder ausgebildet ist.

Günstigerweise ist die Bewegungseinrichtung zwischen dem Trägerelement und dem Boden angeordnet oder ausgebildet. Auf diese Weise ist die Bewegungseinrichtung geschützt angeordnet. Insbesondere können zu reinigende dreidimensionale Objekte nicht mit der Bewegungseinrichtung oder Komponenten desselben in Kontakt kommen.

Um insbesondere zu verhindern, dass große Mengen von flüchtigem Reinigungsmittel aus der Reinigungskammer entweichen können, ist es günstig, wenn die Reinigungskammer oben in Bezug auf die Schwerkraftrichtung durch einen abnehmbaren Deckel verschlossen ist. Insbesondere kann der Deckel derart ausgebildet sein, dass ein gasdichtes oder im Wesentlichen gasdichtes Verschließen der Reinigungskammer möglich ist. Dies hat insbesondere Vorteile, wenn geruchsintensive und gesundheitsschädliche Reinigungsmittel eingesetzt werden, die nach Möglichkeit nicht eingeatmet werden sollen.

Des Weiteren ist es günstig, wenn das Reinigungssystem eine Trocknungseinrichtung umfasst. Die Trocknungseinrichtung ermöglicht es insbesondere, sowohl das gereinigte dreidimensionale Objekt als auch die Reinigungskammer nach einem der mehreren Reinigungsgänge zu trocknen. Eine Trocknung hat insbesondere auch den Vorteil, dass flüchtige Reinigungsmittel vollständig entfernt werden können, was zu einer Verminderung einer Geruchsbelästigung am Einsatzort des Reinigungssystems führt.

Besonders kompakt lässt sich das Reinigungssystem ausbilden, wenn die Trocknungseinrichtung im Deckel angeordnet oder ausgebildet ist.

Günstig ist es, wenn die Trocknungseinrichtung ein Umwälzgebläse umfasst zum Fördern von Gas aus der Reinigungskammer zu einer Entfeuchtungseinrichtung und von der Entfeuchtungseinrichtung zurück in die Reinigungskammer. Das Umwälzgebläse oder Umluftgebläse ermöglicht insbesondere eine vollständige Entleerung von sich verflüchtigtem Reinigungsmittel aus der Reinigungskammer. Diese kann dann nach der Trocknung geöffnet werden durch Entfernen des Deckels, wobei dann eine Bedienperson praktisch ohne Geruchsbelästigung das gereinigte und getrocknete Objekt aus der Reinigungskammer entnehmen kann. Mit der Entfeuchtungseinrichtung können insbesondere Wasser und verdampfte Bestandteile des Reinigungsmittels entfernt werden, so dass die Reinigungskammer nach dem Trocknungsvorgang vorzugsweise nur noch Raumluft enthält.

Ferner ist es vorteilhaft, wenn das Reinigungssystem eine Abluftbehandlungseinrichtung umfasst. Mit der Abluftbehandlungseinrichtung können insbesondere gesundheitsschädliche oder gegebenenfalls giftige Stoffe, die aus dem Reinigungsmittel entweichen können, aus der Behandlungskammer entfernt werden, bevor die behandelte Abluft aus der Reinigungskammer in die Umgebung des Reinigungssystems abgeleitet wird.

Auf einfache Weise lässt sich eine Abluft des Reinigungssystems behandeln, wenn die Abluftbehandlungseinrichtung mindestens einen Filter umfasst. Vorzugsweise ist der Filter in Form eines Aktivkohlefilters ausgebildet. Mit einem solchen Aktivkohlefilter lassen sich beispielsweise Chemikalien wie Methanol, die unangenehme Gerüche verbreiten, in definierter Weise binden und mit dem Filter entsorgen.

Ein besonders kompakter Aufbau des Reinigungssystems kann insbesondere dadurch erreicht werden, dass die Abluftbehandlungseinrichtung im Deckel angeordnet oder ausgebildet ist.

Insbesondere kann die Abluftbehandlungseinrichtung in die Trocknungseinrichtung integriert sein oder einen Bestandteil derselben bilden.

Gemäß einer weiteren bevorzugten Ausführungsform kann vorgesehen sein, dass das Reinigungssystem mindestens zwei Reinigungsmittelbehälter umfasst. Dies ermöglicht es insbesondere, ein Reinigungsmittel aus einem ersten Reinigungsmittelbehälter für einen ersten Reinigungsgang zu nutzen und ein Reinigungsmittel aus einem zweiten Reinigungsmittelbehälter für einen zweiten Reinigungsgang. Das Reinigungsmittel wird beispielsweise vom ersten Reinigungsmittelbehälter in die Reinigungskammer gefördert, das Objekt in dieser gereinigt und dann das kontaminierte Reinigungsmittel zurück in den Reinigungsmittelbehälter gefördert. Dann kann beispielsweise ein zweiter Reinigungsgang durchgeführt werden, indem das Reinigungsmittel aus einem zweiten Reinigungsmittelbehälter in die Reinigungskammer gefördert wird. Das beim zweiten Reinigungsgang kontaminierte Reinigungsmittel kann dann wieder zurück in den zweiten Reinigungsmittelbehälter gefördert werden. Grundsätzlich können auch drei, vier oder mehr Reinigungsmittelbehälter vorgesehen sein. Insbesondere können die Reinigungsmittelbehälter unterschiedliche Reinigungsmittel enthalten, so dass eine Reinigung der dreidimensionalen Objekte weiter optimiert werden kann.

Um eine Verunreinigung und möglicherweise eine unerwünschte Reaktion beim Zusammentreten unterschiedlicher Reinigungsmittel zu verhindern, ist es günstig, wenn jedem der mindestens zwei Reinigungsmittelbehälter eine eigene Fördereinrichtung zugeordnet ist. Auf diese Weise lässt sich insbesondere auch eine Entsorgung der Reinigungsmittelbehälter mit kontaminiertem Reinigungsmittel vereinfachen, da im Wesentlichen keine Mischchemikalien entsorgt werden müssen.

Günstigerweise enthalten die mindestens zwei Reinigungsmittelbehälter unterschiedliche Reinigungsmittel. Beispielsweise können Methanol in einem Reinigungsmittelbehälter und Isopropylalkohol in einem zweiten Reinigungsmittelbehälter bereitgestellt werden zum Reinigen der dreidimensionalen Objekte. Unterschiedliche Reinigungsmittel können insbesondere auch Reinigungsmittel mit unterschiedlichem Kontaminationsgrad sein. Beispielsweise kann in einem ersten Reinigungsmittelbehälter Methanol ohne oder mit einem niedrigen Grad der Kontamination von nicht verfestigtem verfestigbarem Material sein. In einem zweiten Reinigungsmittelbehälter kann ebenfalls Methanol sein, jedoch mit einem höheren Kontaminationsgrad. Insbesondere kann ein erster Reinigungsvorgang dann mit dem stärker mit nicht verfestigtem verfestigbarem Material kontaminierten Reinigungsmittel durchgeführt werden, ein zweiter Reinigungsvorgang dann mit dem weniger stark mit nicht verfestigtem verfestigbarem Material kontaminierten Reinigungsmittel. Ferner können unterschiedliche Reinigungsmittel auch Reinigungsmittel mit unterschiedlichem Konzentrationsgrad sein, also beispielsweise eine wässrige Lösung mit einem Methanolgehalt von 50% und eine wässrige Lösung mit einem Methanolgehalt von 70%.

Vorteilhaft ist es, wenn das Reinigungssystem ausgebildet ist, um mit dem Reinigungsmittel, welches in einem ersten der mindestens zwei Reinigungsmittelbehälter enthalten ist, einen ersten Reinigungsvorgang durchzuführen und um mit dem Reinigungsmittel, welches in einem zweiten der mindestens zwei Reinigungsmittelbehälter enthalten ist, einen zweiten Reinigungsvorgang durchzuführen. Das Reinigungsmittel aus dem ersten Reinigungsbehälter kann in die Reinigungskammer gefördert und für einen ersten Reinigungsvorgang des mindestens einen dreidimensionalen Objekts genutzt werden. Anschließend kann es wieder in den ersten Reinigungsbehälter gefördert werden. Es weist dann einen höheren Kontaminationsgrad als vor dem ersten Reinigungsvorgang auf. Für den zweiten Reinigungsvorgang kann das Reinigungsmittel aus dem zweiten Reinigungsmittelbehälter in die Reinigungskammer gefördert und für einen zweiten Reinigungsvorgang genutzt werden. Anschließend kann es wieder in den zweiten Reinigungsbehälter gefördert werden. Es weist dann, wenn die Reinigungsmittel im ersten und im zweiten Reinigungsmittelbehälter vor dem ersten und zweiten Reinigungsdurchgang einen identischen Kontaminationsgrad an noch nicht verfestigtem verfestigbaren Material aufgewiesen haben, normalerweise einen geringeren Kontaminationsgrad auf als das Reinigungsmittel im ersten Reinigungsmittelbehälter nach dem ersten Reinigungsvorgang.

Günstig ist es, wenn das Reinigungssystem ausgebildet ist, um nach dem zweiten Reinigungsvorgang einen dritten Reinigungsvorgang durchzuführen mit dem in den ersten Reinigungsmittelbehälter nach dem ersten Reinigungsvorgang zurückgeförderten Reinigungsmittel und um nach dem dritten Reinigungsvorgang einen vierten Reinigungsvorgang durchzuführen mit dem in den zweiten Reinigungsmittelbehälter nach dem zweiten Reinigungsvorgang zurückgeförderten Reinigungsmittel. Durch diese Abfolge bei der nochmaligen Nutzung der bereits genutzten Reinigungsmittel kann insbesondere sichergestellt werden, dass bei nochmaliger Reinigung bereits gereinigter Objekte oder bei der erstmaligen Reinigung von neu hergestellten Objekten zunächst eine Art Grobreinigung mit dem stärker kontaminierten Reinigungsmittel aus dem ersten Reinigungsmittelbehälter durchgeführt wird und daran anschließend der vierte Reinigungsvorgang mit dem weniger stark kontaminierten Reinigungsmittel. Durch diese mehrfache Nutzung der Reinigungsmittel kann insbesondere Reinigungsmittel gespart werden, denn das Reinigungsmittel im zweiten Reinigungsmittelbehälter ist nach dem zweiten Reinigungsvorgang weniger stark kontaminiert als das Reinigungsmittel im ersten Reinigungsmittelbehälter nach dem ersten Reinigungsvorgang. Der beschriebene Ablauf kann insbesondere durchgeführt werden, bevor ein noch nicht gereinigtes dreidimensionales Objekt einer ersten Reinigungsprozedur unterzogen wird.

Um die Handhabung des Reinigungssystems weiter zu verbessern ist es günstig, wenn das Reinigungssystem einen Aufnahmebehälter für den mindestens einen Reinigungsmittelbehälter umfasst und wenn der Aufnahmebehälter mindestens einen mit der Reinigungskammer fluidwirksam verbundenen Ansaugstutzen zum Einführen in den mindestens einen Reinigungsmittelbehälter umfasst. Beispielsweise können die Reinigungsmittelbehälter in Flaschenform mit Schraubverschlüssen bereitgestellt werden. Zum Befüllen der Reinigungskammer muss dann lediglich der Ansaugstutzen in den geöffneten Reinigungsmittelbehälter eingeführt werden. Den oder die Reinigungsvorgänge kann dann das Reinigungssystem bei entsprechender Ausbildung grundsätzlich vollautomatisch durchführen. Der Aufnahmebehälter kann insbesondere derart ausgebildet sein, dass er einen im Wesentlichen geschlossenen Aufnahmeraum für den mindestens einen Reinigungsmittelbehälter definiert. So kann insbesondere eine undefinierte Verflüchtigung von Reinigungsmitteln am Ort, an dem das Reinigungssystem eingesetzt wird, zu großen Teilen verhindert werden. Außerdem kann ein solcher Aufnahmebehälter für einen sicheren Stand der Reinigungsmittelbehälter sorgen, so dass diese nicht umkippen können, wobei das Reinigungsmittel in undefinierter Weise aus dem Reinigungsmittelbehälter austreten kann.

Für einen definierten Betrieb des Reinigungssystems ist es insbesondere günstig, wenn der der mindestens eine Reinigungsmittelbehälter ein Speicherelement umfasst zum Speichern von mindestens einem das im mindestens einen Reinigungsmittelbehälter enthaltene Reinigungsmittel charakterisierenden Parameter. Bei dem mindestens einen Parameter kann es sich insbesondere um die Art des Reinigungsmittels handeln und/oder um ein im Reinigungsmittelbehälter enthaltenes Volumen des Reinigungsmittels und/oder um eine chemische Eigenschaft und/oder physikalische Eigenschaft des Reinigungsmittels. Weitere Parameter oder Daten sind insbesondere eine Reinheit des Reinigungsmittels und etwaige Gefahrhinweise.

Vorzugsweise umfasst das Reinigungssystem eine Ausleseeinrichtung zum Auslesen der im Speicherelement gespeicherten Parameter und/oder Daten aus dem Speicherelement. Bei der Ausleseeinrichtung kann es sich insbesondere um eine berührungslose Ausleseeinrichtung handeln, die das Auslesen des Speicherelements ohne direkten Kontakt ermöglicht. Beispielsweise kann die Ausleseeinrichtung in Form einer optischen oder Nahfeld-Ausleseeinrichtung ausgebildet sein. So können insbesondere Barcodes gescannt oder RFID-Chips ausgelesen werden.

Vorteilhaft ist es, wenn die Ausleseeinrichtung am Aufnahmebehälter angeordnet oder ausgebildet ist. Dies ermöglicht es insbesondere, Reinigungsmittelbehälter in den Aufnahmebehälter einzusetzen und die im Speicherelement gespeicherten Daten oder Parameter automatisch auszulesen.

Auf einfache Weise lässt sich das Reinigungssystem ausbilden, wenn das Speicherelement einen Barcode oder einen RFID-Chip umfasst.

Gemäß einer weiteren bevorzugten Ausführungsform kann vorgesehen sein, dass das Reinigungssystem eine Steuer- und/oder Regelungseinrichtung zum Steuern und/oder Regeln des Reinigungssystems umfasst. Insbesondere können mit der Steuer- und /oder Regelungseinrichtung Komponenten des Reinigungssystems einfach und sicher angesteuert werden. So kann insbesondere ein automatischer Betrieb des Reinigungssystems ermöglicht werden.

Vorteilhaft ist es, wenn die Steuer- und/oder Regelungseinrichtung eine Zeitvorgabeeinrichtung umfasst zum Vorgeben einer Reinigungszeit, während der das Reinigungsmittel nach dem Fördern vom mindestens einen Reinigungsmittelbehälter und vor dem Zurückfördern in den mindestens einen Reinigungsmittelbehälter in der Reinigungskammer verbleibt. Eine solche Zeitvorgabeeinrichtung hat insbesondere den Vorteil, dass das zu reinigende Objekt nicht zu lange mit dem Reinigungsmittel in Kontakt steht, was im ungünstigsten Fall, je nach Reinigungsmittel, zu einem teilweisen Auflösen des Objekts führen könnte. Sinn und Zweck des Reinigungssystems ist lediglich, nicht verfestigtes verfestigbares Material vom dreidimensionalen Objekt zu entfernen, nicht jedoch das dreidimensionale Objekt zu verändern oder durch das Reinigen zu beschädigen. Mit der Zeitvorgabeeinrichtung kann im Zusammenwirken mit der Steuer- und/oder Regelungseinrichtung somit das zeitliche Verbleiben des Reinigungsmittels in der Reinigungskammer automatisch begrenzt werden. Insbesondere dann, wenn die Art des Reinigungsmittels bekannt ist, kann diese Information der Steuer- und/oder Regelungseinrichtung durch eine Bedienperson oder automatisch über die oben beschriebene Ausleseeinrichtung in Verbindung mit einem am Reinigungsmittelbehälter angeordneten Speicherelement übertragen werden. So können Fehler beim Reinigen der dreidimensionalen Objekte ausgeschlossen oder zumindest minimiert werden.

Vorteilhaft ist es, wenn die Steuer- und/oder Regelungseinrichtung ausgebildet ist zum automatischen Vorgeben der Reinigungszeit in Abhängigkeit des verfestigbaren Materials, aus dem das mindestens eine zu reinigende dreidimensionale Objekt ausgebildet ist, und/oder in Abhängigkeit des Reinigungsmittels. Wie beschrieben können auf diese Weise unerwünschte Wechselwirkungen zwischen dem Reinigungsmittel und dem zu reinigenden Objekt vermieden werden.

Günstig ist es, wenn das Reinigungssystem eine Eingabeeinrichtung umfasst zum Eingeben des Typs des verfestigbaren Materials, aus dem das mindestens eine zu reinigende dreidimensionale Objekt ausgebildet ist. Insbesondere kann die Eingabeeinrichtung auch ausgebildet sein, zum Eingeben des Reinigungsmittels, das zum Reinigen des dreidimensionalen Objekts eingesetzt werden soll. Das Reinigungssystem kann dann insbesondere automatisch wie beschrieben eine Reinigungszeit unter Berücksichtigung der eingegebenen Daten auswählen und vorgeben.

Günstig ist es, wenn das Reinigungssystem eine Anzeigeeinrichtung umfasst zum Anzeigen von Betriebsparametern und/oder Betriebsmodi des Reinigungssystems. So kann eine Bedienperson auf einfache Weise Informationen zum Reinigungsprozess an der Anzeigeeinrichtung angezeigt bekommen. Insbesondere können Warnhinweise oder Fehlbedingungen des Reinigungssystems an der Anzeigeeinrichtung angezeigt werden, beispielsweise wenn das falsche oder ein unzertifiziertes Reinigungsmittel eingesetzt werden sollte.

Vorteilhaft ist es, wenn das Reinigungssystem ausgebildet ist, um einem Nutzer einen Nutzungsgrad des Reinigungsmittels anzuzeigen, insbesondere mit der Anzeigeeinrichtung. So kann ein Nutzer sofort erkennen, ob er das Reinigungsmittel weiter nutzen kann oder ob er es gegebenenfalls durch neues oder weniger kontaminiertes Reinigungsmittel austauschen muss.

Gemäß einer bevorzugten Ausführungsform kann vorgesehen sein, dass die Steuer- und/oder Regelungseinrichtung steuerungswirksam mit der mindestens einen Fördereinrichtung und/oder mit der mindestens einen Bewegungseinrichtung und/oder mit der Trocknungseinrichtung und/oder mit der Abluftbehandlungseinrichtung und/oder mit der Ausleseeinrichtung und/oder mit der Eingabeeinrichtung und/oder mit der Anzeigeeinrichtung gekoppelt ist. Insbesondere dann, wenn die Steuer- und/oder Regelungseinrichtung steuerungswirksam mit allen genannten Einrichtungen steuerungswirksam gekoppelt ist, kann eine Reinigung dreidimensionaler Objekte vollautomatisiert oder im Wesentlichen vollautomatisiert durchgeführt werden.

Günstig ist es, wenn die Steuer- und/oder Regelungseinrichtung ausgebildet ist, um die mindestens eine Fördereinrichtung in Abhängigkeit eines vorgegebenen maximalen Nutzungs- oder Kontaminationsgrads des Reinigungsmittels zu deaktivieren. So kann sichergestellt werden, dass ein Nutzer das Reinigungssystem nicht weiter nutzen kann, wenn ein Kontaminationsgrad oder Nutzungsgrad einen vorgegebenen Grenzwert übersteigt.

Um das Austreten geruchsintensiver Gase, insbesondere verflüchtigter Reinigungsmittel, zu vermeiden, ist es vorteilhaft, wenn das Reinigungssystem fluiddicht ausgebildet ist. Insbesondere kann es gasdicht ausgebildet sein.

Ferner wird die eingangs gestellte Aufgabe erfindungsgemäß durch ein Verfahren gemäß Anspruch 13 gelöst.

Dreidimensionale Objekte in der beschriebenen Weise zu reinigen, hat insbesondere den Vorteil, dass Reinigungsmittelbehälter, mit denen unkontaminierte Reinigungsmittel zum Reinigen der dreidimensionalen Objekte bereitgestellt werden, kontaminierte Reinigungsmittel wieder aufnehmen können, wodurch eine einfache Entsorgung der kontaminierten Reinigungsmittel ermöglicht wird. Insgesamt kann so eine Handhabung eines Reinigungsverfahrens vereinfacht und mit einer fachgerechten Entsorgung von Reinigungsmitteln durchgeführt werden. Um eine optimale Entfernung von nicht verfestigtem verfestigbarem Material vom zu reinigenden dreidimensionalen Objekt sicherstellen zu können, ist gemäß der Erfindung vorgesehen, dass das in die Reinigungskammer geförderte Reinigungsmittel zum Reinigen des mindestens einen dreidimensionalen Objekts in der Reinigungskammer bewegt wird. Insbesondere wird das Reinigungsmittel derart bewegt, dass eine turbulente Strömung desselben in der Reinigungskammer entsteht, wodurch noch nicht verfestigtes verfestigbares Material vom dreidimensionalen Objekt optimal weggespült werden kann.

Um eine besonders gute Reinigung der dreidimensionalen Objekte zu ermöglichen, ist es vorteilhaft, wenn zwei oder mehr Reinigungsgänge durchgeführt werden.

Um nicht verfestigtes verfestigbares Material besonders effizient von dreidimensionalen Objekten entfernen zu können, ist es günstig, wenn bei jedem der zwei oder mehr Reinigungsgänge ein anderes Reinigungsmittel verwendet wird. Insbesondere können unterschiedliche Reinigungsmittel genutzt werden, die unterschiedliche Bestandteile des verfestigbaren Materials lösen können.

Um insbesondere ein Vermischen unterschiedlicher Reinigungsmittel zu verhindern, ist es vorteilhaft, wenn nach jedem Reinigungsgang die Reinigungskammer vollständig entleert wird.

Um eine optimale Reinigung des dreidimensionalen Objekts sicherzustellen, ist es günstig, wenn das in die Reinigungskammer geförderte Reinigungsmittel während einer Reinigungszeit in der Reinigungskammer verbleibt. Insbesondere kann es sich dabei um eine Mindestverweildauer handeln. Ferner kann die Reinigungszeit auch begrenzt vorgegeben werden, um eine Beschädigung des zu reinigenden dreidimensionalen Objekts zu vermeiden.

Vorteilhaft ist es, wenn die Reinigungszeit in Abhängigkeit des verfestigbaren Materials, aus dem das mindestens eine zu reinigende dreidimensionale Objekt ausgebildet ist, und/oder in Abhängigkeit des Reinigungsmittels vorgegeben wird. Auf diese Weise kann insbesondere eine optimale Reinigung einerseits sichergestellt und eine Beschädigung des zu reinigenden dreidimensionalen Objekts andererseits vermieden werden. Insbesondere kann so auf einfache Weise eine Reinigungszeit begrenzt werden. Eine Verweildauer des Reinigungsmittels in der Reinigungskammer wird idealerweise so gewählt, dass möglichst viel von dem noch nicht verfestigten verfestigbaren Material vom dreidimensionalen Objekt entfernt werden kann, ohne dieses zu beschädigen.

Ferner ist es vorteilhaft, wenn nach dem mindestens einen Reinigungsgang, die vom Reinigungsmittel entleerte Reinigungskammer getrocknet wird. Dabei wird automatisch auch das in der Reinigungskammer aufgenommene dreidimensionale Objekt getrocknet. Insbesondere ist es vorteilhaft, wenn eine solche Trocknung nach dem letzten Reinigungsgang durchgeführt wird. Die Reinigungskammer lässt sich dann öffnen und das gereinigte dreidimensionale Objekt entnehmen, ohne dass eine übermäßige Geruchsbelästigung in der Umgebung eines der oben beschriebenen Reinigungssysteme entsteht.

Um eine Geruchsbelästigung in der Umgebung insbesondere eines Reinigungssystems zum Durchführen eines der beschriebenen Verfahren zu vermeiden, ist es günstig, wenn beim Trocknen der Reinigungskammer entweichende Geruchsstoffe herausgefiltert werden. Dies kann beispielsweise mit einem oder mehreren Aktivkohlefiltern erfolgen.

Ferner wird die Verwendung eines der oben beschriebenen Reinigungssysteme zur Durchführung eines der oben beschriebenen Verfahren vorgeschlagen.

Die nachfolgende Beschreibung bevorzugter Ausführungsformen der Erfindung dient im Zusammenhang mit den Zeichnungen der näheren Erläuterung. Es zeigen:
- Figur 1:: eine schematische Darstellung eines ersten Ausführungsbeispiels eines Reinigungssystems;
- Figur 2:: eine schematische Darstellung eines zweiten Ausführungsbeispiels eines Reinigungssystems;
- Figur 3:: eine schematische Darstellung eines dritten Ausführungsbeispiels eines Reinigungssystems;
- Figur 4:: eine schematische Darstellung eines vierten Ausführungsbeispiels eines Reinigungssystems;
- Figur 5:: eine schematische Darstellung eines fünften Ausführungsbeispiels eines Reinigungssystems;
- Figur 6:: eine schematische Darstellung eines Ablaufs eines Reinigungsverfahrens; und
- Figur 7:: eine schematische Darstellung eines Ablaufs eines weiteren Reinigungsverfahrens.

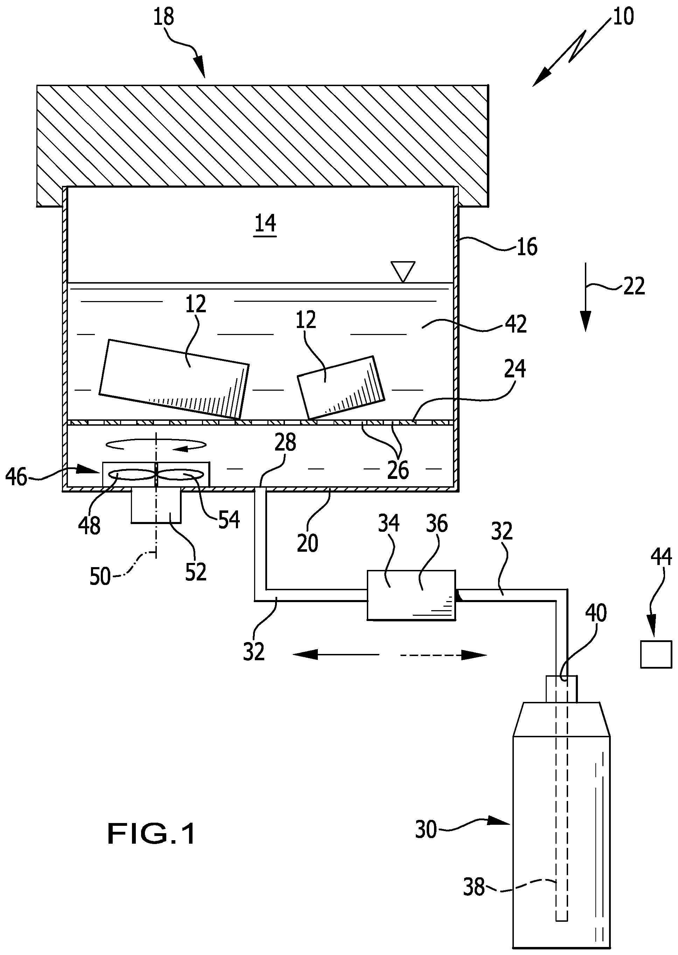

Ein erstes Ausführungsbeispiel eines Reinigungssystems 10 zum Reinigen eines oder mehrerer dreidimensionaler Objekte 12, welche durch Verfestigen, insbesondere schichtweise oder kontinuierlich, eines unter Einwirkung von Strahlung verfestigbaren Materials ausgebildet sind, ist schematisch in Figur 1 dargestellt.

Das Reinigungssystem 10 umfasst eine Reinigungskammer 14, die von einem wannenförmigen Behälter 16 definiert wird. Der Behälter 16 ist in Bezug auf die Schwerkraftrichtung oben offen und wird wahlweise mit einem abnehmbaren Deckel 18 verschlossen. Die Schwerkraftrichtung ist in Figur 1 schematisch durch den Pfeil 22 symbolisiert.

Vom Boden 20 beabstandet ist im Wesentlichen parallel zum Boden 20 und sich quer zur Schwerkraftrichtung erstreckend ein Trägerelement 24 angeordnet. Das Trägerelement ist fluidurchlässig ausgebildet und weist eine Mehrzahl von Durchbrechungen 26 auf.

Das Trägerelement 24 ist wahlweise aus einem Gitter oder Netz aus einem Metall oder Kunststoff ausgebildet.

An der Reinigungskammer 14 ist ein Reinigungsmitteleinlass 28 angeordnet oder ausgebildet. Bei dem in Figur 1 dargestellten Ausführungsbeispiel ist der Reinigungsmitteleinlass 28 am Boden 20 angeordnet oder ausgebildet.

Die Reinigungskammer 14 ist fluidwirksam mit einem Reinigungsmittelbehälter 30 verbindbar. Zu diesem Zweck ist eine Verbindungsleitung 32 vorgesehen, die den Reinigungsmitteleinlass 28 mit einer Fördereinrichtung 34 in Form einer Flüssigkeitspumpe 36 fluidwirksam verbindet sowie die Flüssigkeitspumpe 36 mit dem Reinigungsmittelbehälter 30. Ein freies Ende der Verbindungsleitung 32 ist in Form eines Ansaugstutzens 38 ausgebildet, der durch eine Öffnung 40 des Reinigungsmittelbehälters 30 in diesen eintaucht.

Zum Reinigen dreidimensionaler Objekte 12 werden diese in die Reinigungskammer 14 eingebracht, so dass sie auf dem Trägerelement 24 aufliegen. Der Ansaugstutzen 38 der Verbindungsleitung 32 wird in den mit unkontaminiertem Reinigungsmittel befüllten Reinigungsmittelbehälter 30 eingeführt.

Mit der Fördereinrichtung 34 wird der Inhalt des Reinigungsmittelbehälters 30 in die Reinigungskammer 14 gefördert. Die Objekte 12 sind, wie schematisch in Figur 1 dargestellt, vollständig vom Reinigungsmittel 42 umgeben.

Nach einer Reinigungszeit, auch als Verweildauer des Reinigungsmittels 42 in der Reinigungskammer 14 bezeichnet, wird das nun mit noch nicht verfestigtem verfestigbarem Material, das an den Objekten 12 nach deren Herstellung anhaftet, kontaminierte Reinigungsmittel 42 mit der Fördereinrichtung 34 aus der Reinigungskammer 14 heraus und in den Reinigungsmittelbehälter 30 zurück gefördert.

Die Reinigungskammer 14 ist nun leer und kann beispielsweise zum Austrocknen beziehungsweise Abtrocknen der Objekte 12 geöffnet werden durch Abheben des Deckels 18.

Der Ansaugstutzen 38 wird dann aus dem mit kontaminiertem Reinigungsmittel befüllten Reinigungsmittelbehälter 30 herausgezogen und der Reinigungsmittelbehälter 30 wird mit einem Verschluss 44 verschlossen. Das kontaminierte Reinigungsmittel 42 kann so im Reinigungsmittelbehälter 30 auf einfache und sichere Weise entsorgt werden.

Optional umfasst das Reinigungssystem 10 eine Bewegungseinrichtung 46 zum Bewegen des Reinigungsmittels 42 in der Reinigungskammer 14. Die Bewegungseinrichtung 46 ist wahlweise als Rühreinrichtung ausgebildet oder in Form einer strömungsmechanischen Fluidstrahlerzeugungseinrichtung mit mindestens einer Düse. Insbesondere ist die Bewegungseinrichtung 46 ausgebildet zum Erzeugen einer turbulenten Strömung in der mit Reinigungsmittel 42 befüllten Reinigungskammer 14.

Die Bewegungseinrichtung 46 ist bei einem Ausführungsbeispiel mit einem Propeller 48 ausgestattet, der um eine Rotationsachse 50 rotierbar angeordnet ist und zum Bewegen des Reinigungsmittels 42 in Rotation versetzt wird. Hierfür ist eine Antriebseinrichtung 52 vorgesehen, die mit dem ein Bewegungselement 54 bildenden Propeller 48 magnetisch gekoppelt ist, so dass auf eine Durchbrechung der Reinigungskammer 14 verzichtet werden kann.

Die Bewegungseinrichtung 46 ist zwischen dem Boden 20 und dem Trägerelement 24 angeordnet. Auf diese Weise kann sichergestellt werden, dass die Objekte 12 nicht in Kontakt mit der Bewegungseinrichtung 46 kommen können.

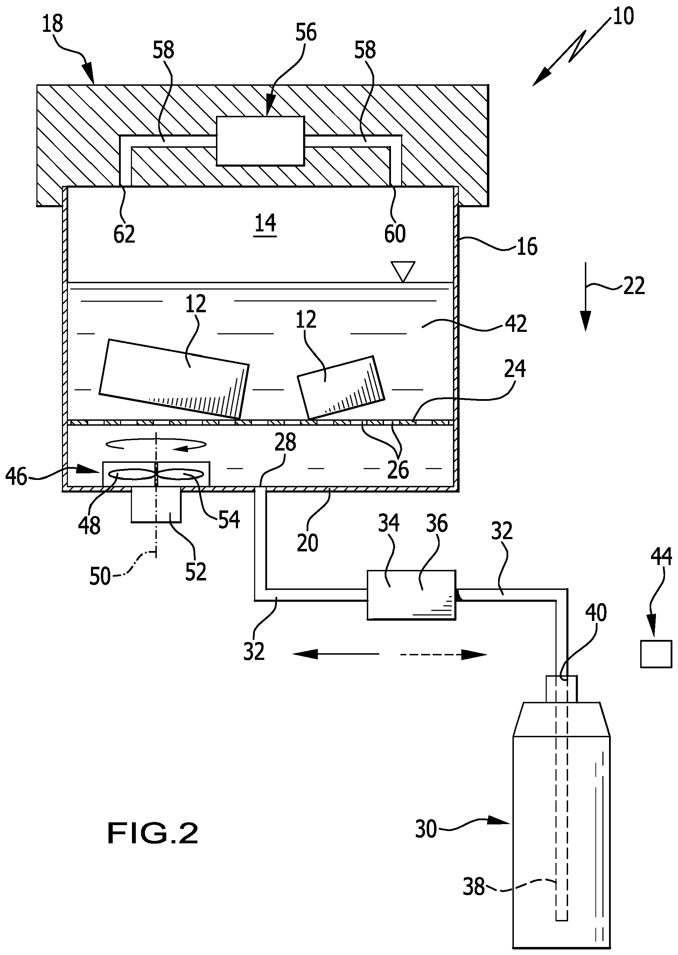

Ein zweites Ausführungsbeispiel eines Reinigungssystems 10 ist schematisch in Figur 2 dargestellt. Es entspricht in seinem Aufbau im Wesentlichen dem ersten Ausführungsbeispiel des Reinigungssystems 10. Daher sind identische oder in ihrer Funktion vergleichbare Komponenten und Elemente mit denselben Bezugszeichen versehen wie beim ersten Ausführungsbeispiel des Reinigungssystems 10.

Das zweite Ausführungsbeispiel des Reinigungssystems 10 umfasst eine Trocknungseinrichtung 56, die im Deckel 18 angeordnet oder ausgebildet ist. Sie steht über eine Verbindungsleitung 58 einerseits mit einem Einlass 60 und einem Auslass 62 am Deckel in Fluidverbindung. In der Reinigungskammer 14 enthaltene Gase können durch den Einlass 60 einströmen und in der Trocknungseinrichtung 56 aus einem Gasstrom entfernt werden. Der getrocknete Gasstrom kann dann von der Trocknungseinrichtung 56 durch den Auslass 62 zurück in die Reinigungskammer 14 geführt werden.

Die Trocknungseinrichtung 56 wird vorzugsweise dann betrieben, wenn wie oben beschrieben das kontaminierte Reinigungsmittel 42 wieder zurück in den Reinigungsmittelbehälter 30 gefördert wurde. Die Reinigungskammer 14 ist dann leer und kann mittels der Trocknungseinrichtung 56 vollständig oder im Wesentlichen vollständig ausgetrocknet werden, wobei dabei auch die Objekte 12 getrocknet werden. Nach diesem Trocknungsvorgang kann der Deckel 18 zum Entnehmen der Objekte 12 von der Reinigungskammer 14 abgenommen werden.

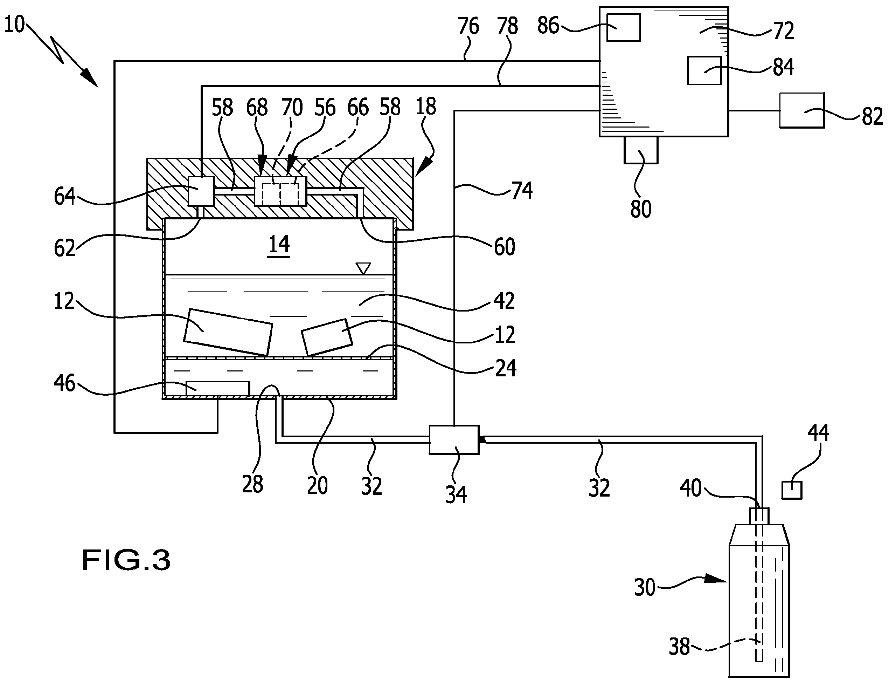

Ein drittes Ausführungsbeispiel eines Reinigungssystems 10 ist schematisch in Figur 3 dargestellt. Wiederum sind identische Komponenten und Elemente bei dem in Figur 3 dargestellten Ausführungsbeispiel mit denselben Bezugszeichen bezeichnet wie bei den Ausführungsbeispielen, die in den Figuren 1 und 2 dargestellt sind.

Beim dritten Ausführungsbeispiel umfasst die Trocknungseinrichtung 56 ein im Deckel 18 angeordnetes Umwälzgebläse 64, um zum Trocknen das in der vom Reinigungsmittel 42 entleerten Reinigungskammer 14 enthaltene Gas durch den Einlass 60 und den Auslass 62 mit einem hinreichend großen Volumenstrom zu führen, um eine schnelle und effiziente Trocknung zu erreichen.

Die Trocknungseinrichtung 56 umfasst ferner eine Entfeuchtungseinrichtung 66 zum Entfernen verdampften Reinigungsmittels 42 aus dem durch die Verbindungsleitung 58 geförderten Abluftstroms.

Das Reinigungssystem 10 umfasst ferner eine Abluftbehandlungseinrichtung 68 mit einem Filter 70. Dieser ist bei einem Ausführungsbeispiel in Form eines Aktivkohlefilters ausgebildet.

Die Abluftbehandlungseinrichtung 68 ist beim dritten Ausführungsbeispiel des Reinigungssystems 10 im Deckel 18 angeordnet oder ausgebildet.

Die Trocknungseinrichtung 56 umfasst bei einem Ausführungsbeispiel den Filter 70. Bei weiteren Ausführungsbeispielen können auch zwei oder mehr Filter 70 vorgesehen sein.

Das Reinigungssystem 10 umfasst ferner eine Steuer- und/oder Regelungseinrichtung 72 zum Steuern und/oder Regeln des Reinigungssystems 10. Über Steuerleitungen 74, 76 und 78 ist die Steuer- und/oder Regelungseinrichtung 72 steuerungswirksam mit der Fördereinrichtung 34, der Bewegungseinrichtung 46 beziehungsweise dem Umwälzgebläse 64 verbunden, um diese in gewünschter Weise anzusteuern und optional auch zu regeln.

Das Reinigungssystem 10 umfasst ferner eine Zeitvorgabeeinrichtung 80 zum Vorgeben einer Reinigungszeit. Die Reinigungszeit ist diejenige Zeit, während der das Reinigungsmittel 42 nach dem Fördern vom Reinigungsbehälter 30 in der Reinigungskammer 14 verbleibt, bevor es in den Reinigungsbehälter 30 mit der Fördereinrichtung 34 zurückgefördert wird. Die Zeitvorgabeeinrichtung 80 ist steuerungswirksam mit der Steuer- und/oder Regelungseinrichtung 72 verbunden oder von dieser umfasst.

Optional umfasst das Reinigungssystem 10 eine Eingabeeinrichtung 82 zum Eingeben des Typs des verfestigbaren Materials aus dem das mindestens eine zu reinigende dreidimensionale Objekt 12 ausgebildet ist, und/oder des Typs des Reinigungsmittels 42, das zum Reinigen der Objekte 12 eingesetzt werden soll.

Die Steuer- und/oder Regelungseinrichtung 72 ist bei einem Ausführungsbeispiel ausgebildet zum automatischen Vorgeben der Reinigungszeit in Abhängigkeit des verfestigbaren Materials, aus dem das mindestens eine zu reinigende dreidimensionale Objekt 12 ausgebildet ist, und/oder in Abhängigkeit des Reinigungsmittels 42. Die hierfür erforderlichen Daten können entweder über die Eingabeeinrichtung 82 eingegeben werden oder sind für unterschiedliche Arten verfestigbarer Materialien und unterschiedliche Typen von Reinigungsmitteln 42 in einem Speicher 84 der Steuer- und/oder Regelungseinrichtung 72 hinterlegt.

Zum Einsatz des Reinigungssystems 10 kann beispielsweise ein Anwender über die Eingabeeinrichtung 82 gewünschte Parameter eingeben, die ihm mittels einer Anzeigeeinrichtung des Reinigungssystems 10 angezeigt werden können.

Die Eingabeeinrichtung 82 und die Anzeigeeinrichtung 86 können bei einem Ausführungsbeispiel kombiniert ausgebildet sein in Form eines Touch-Displays.

Die Anzeigeeinrichtung 86 ist insbesondere ausgebildet zum Anzeigen von Betriebsparametern und/oder Betriebsmodi des Reinigungssystems 10.

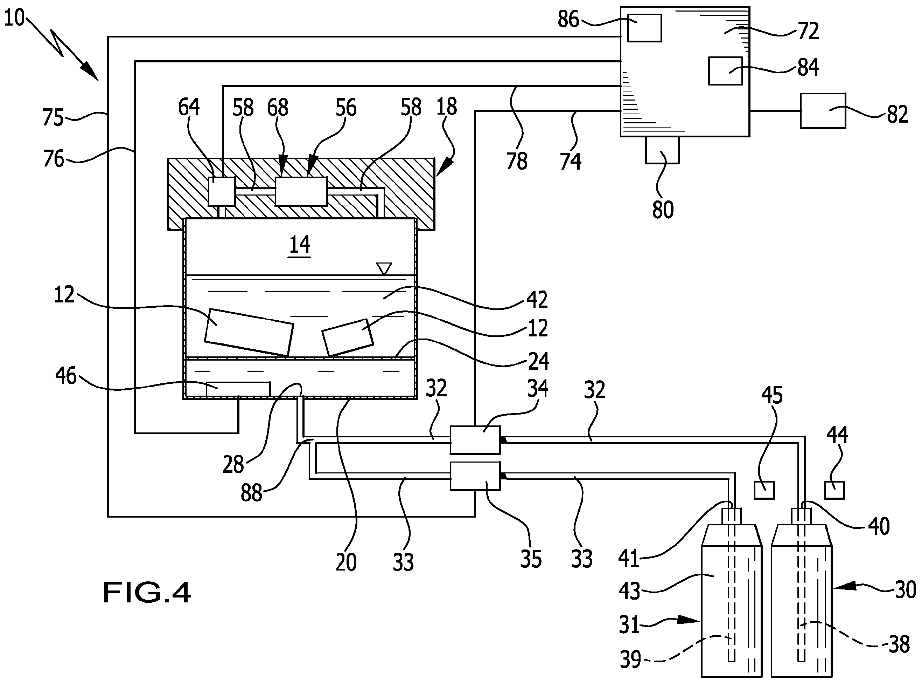

Ein viertes Ausführungsbeispiel eines Reinigungssystems 10 ist schematisch in Figur 4 dargestellt. Es umfasst alle Komponenten des in Figur 3 schematisch dargestellten dritten Ausführungsbeispiels des Reinigungssystems 10. Es unterscheidet sich von diesem jedoch dadurch, dass ein zweiter Reinigungsmittelbehälter 31, der mit einem zweiten unkontaminierten Reinigungsmittel 43 befüllt ist, über eine Verbindungsleitung 33 mit einer zweiten Fördereinrichtung 35 in Fluidverbindung steht, welche wiederum über die Verbindungsleitung 33 mit dem Reinigungsmitteleinlass 28 der Reinigungskammer 14 fluidwirksam verbunden ist.

Die Verbindungsleitungen 32 und 33 sind über ein T-Stück 88 im Bereich des Reinigungsmitteleinlasses 28 fluidwirksam miteinander verbunden.

Die Steuer- und/oder Regelungseinrichtung 72 ist über eine Steuerleitung 75 steuerungswirksam mit der Fördereinrichtung 35 verbunden.

Ein freies Ende der Verbindungsleitung 33 bildet einen Ansaugstutzen 39 analog dem Ansaugstutzen 38.

Der Reinigungsmittelbehälter 31 weist eine Öffnung 41 auf, durch die der Ansaugstutzen 39 in den Reinigungsmittelbehälter 31 eingeführt werden kann. Zum Verschließen der Öffnung 41 dient ein Verschluss 45.

Mit dem vierten Ausführungsbeispiel des Reinigungssystems 10 können die Objekte 12 in mindestens zwei Reinigungsgängen mit den Reinigungsmitteln 42 und 43 gereinigt werden. Beispielsweise kann derart vorgegangen werden, dass die zunächst leere Reinigungskammer 14 mit dem Reinigungsmittel 42 befüllt wird mittels der Fördereinrichtung 34. Das Reinigungsmittel 42 wird mit der Bewegungseinrichtung 46 in der beschriebenen Weise bewegt. Unter Berücksichtigung der für das Reinigungsmittel 42 und das verfestigbare Material, aus dem die Objekte 12 hergestellt sind, vorgegebenen Parameter wird die Reinigungszeit durch die Steuer- und/oder Regelungseinrichtung 72 vorgegeben.

Spätestens mit Ablauf der Reinigungszeit fördert die Fördereinrichtung 34 das kontaminierte Reinigungsmittel 42 aus der Reinigungskammer 14 zurück in den Reinigungsmittelbehälter 30.

Daran anschließend kann nun unkontaminiertes Reinigungsmittel 43 aus dem Reinigungsmittelbehälter 31 mit der Fördereinrichtung 35 in die Reinigungskammer 14 gepumpt werden. In diesem zweiten Reinigungsgang, dem eine entsprechend an das Reinigungsmittel 43 angepasste Reinigungszeit zugeordnet ist, wird das Reinigungsmittel 43 mit der Bewegungseinrichtung 46 in der Reinigungskammer bewegt und nach Ablauf der Reinigungszeit mit der Fördereinrichtung 35 aus der Reinigungskammer 14 zurück in den Reinigungsmittelbehälter 31 gepumpt.

Nach dem Entleeren der Reinigungskammer 14 kann diese wie oben beschrieben mit der Trocknungseinrichtung 56 getrocknet werden. Eine Abluftbehandlung kann mit der Abluftbehandlungseinrichtung 68 durchgeführt werden.

Ist der Kontaminationsgrad der Reinigungsmittel 42 und 43 mit nicht verfestigtem verfestigbarem Material vor den beiden Reinigungsdurchgängen zunächst gleich, ist der Kontaminationsgrad des zweiten Reinigungsmittels 43 im zweiten Reinigungsmittelbehälter 31 normalerweise niedriger als der Kontaminationsgrad des ersten Reinigungsmittels 42 im ersten Reinigungsmittelbehälter 30. Dies kann man bei dem vierten Ausführungsbeispiel des Reinigungssystems 10 insbesondere zur Reinigung weiterer noch nicht gereinigter Objekte 12 nutzen, und zwar indem ein erster Reinigungsvorgang dieser Objekte zunächst mit dem bereits einmal genutzten Reinigungsmittel 42 aus dem ersten Reinigungsmittelbehälter 30 durchgeführt wird und daran anschließend ein zweiter Reinigungsvorgang mit dem bereits einmal genutzten Reinigungsmittel 43 aus dem zweiten Reinigungsmittelbehälter 31. So können Ressourcen, insbesondere eingesetztes Reinigungsmittel, schonend eingesetzt werden, indem die Reinigungsmittel mehrfach genutzt werden.

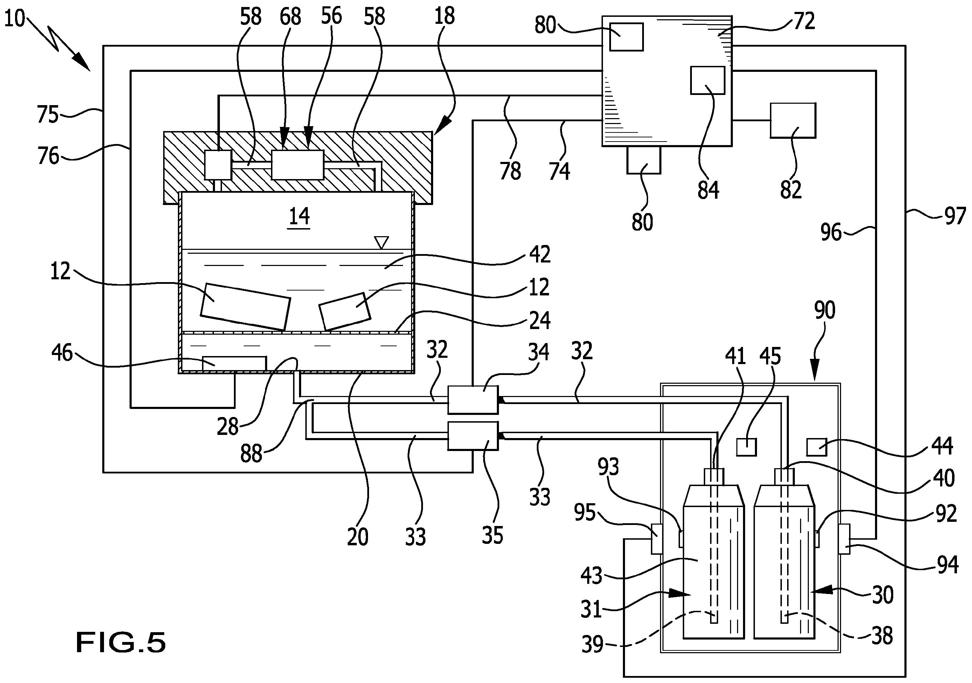

Ein fünftes Ausführungsbeispiel eines Reinigungssystems 10 ist schematisch in Figur 5 dargestellt. Es umfasst sämtliche Komponenten des vierten Ausführungsbeispiels des Reinigungssystems 10, das in Figur 4 beispielhaft dargestellt ist. Zusätzlich umfasst das fünfte Ausführungsbeispiel einen Aufnahmebehälter 90 zum Aufnehmen der Reinigungsmittelbehälter 30 und 31. Diese sind im Aufnahmebehälter 90 geschützt untergebracht und insbesondere gegen ein Umkippen gesichert.

Ferner umfasst dieses Ausführungsbeispiel des Reinigungssystems 10 Reinigungsmittelbehälter 30 und 31, die jeweils ein Speicherelement 92 beziehungsweise 93 tragen zum Speichern von mindestens einem das in den Reinigungsbehältern 30 und 31 enthaltenen Reinigungsmitteln 42 und 43 charakterisierenden Parametern. Dabei handelt es sich beispielsweise um die Art des Reinigungsmittels 42 beziehungsweise 43 sowie um das in den Reinigungsmittelbehältern 30 und 31 enthaltene Volumen der Reinigungsmittel 42 beziehungsweise 43.

Das Reinigungssystem 10 umfasst ferner eine Ausleseeinrichtung 94. Optional können auch zwei Ausleseeinrichtungen 94 und 95 vorgesehen sein. Die Ausleseeinrichtungen 94 beziehungsweise 95 sind ausgebildet zum Auslesen der in den Speicherelementen 92 und 93 gespeicherten Parametern oder Daten. Die Ausleseeinrichtungen 94 und 95 sind bei dem Ausführungsbeispiel des Reinigungssystems 10 am Aufnahmebehälter 90 angeordnet beziehungsweise ausgebildet. Dies ermöglicht ein automatisches Auslesen der Speicherelemente 92 beziehungsweise 93, wenn die Reinigungsmittelbehälter 30 und 31 im Aufnahmebehälter 90 aufgenommen sind.

Zwei Ausleseeinrichtungen 94 und 95 sind insbesondere bei Ausführungsbeispielen vorgesehen, bei denen die Speicherelemente 92 und 93 in Form von Barcodes ausgebildet sind. So kann eine sichere Erfassung der Barcodes beider Reinigungsmittelbehälter 30 und 31 sichergestellt werden.

Eine einzige Ausleseeinrichtung 94 genügt beispielsweise dann, wenn die Speicherelemente 92 und 93 in Form von RFID-Chips ausgebildet sind.

Die Ausleseeinrichtungen 94 und 95 sind über Datenleitungen 96 und 97 mit der Steuer- und/oder Regelungseinrichtung 72 verbunden, um die ausgelesenen Daten von der Ausleseeinrichtung 94 und/oder der Ausleseeinrichtung 95 an die Steuer- und/oder Regelungseinrichtung 72 zu übermitteln.

Mit den Speicherelementen 92, 93 ausgestattete Reinigungsmittelbehälter 30 und 31 vorzusehen ermöglicht es, der Steuer- und/oder Regelungseinrichtung 72 den Typ des Reinigungsmittels 42 beziehungsweise 43 automatisch zu übermitteln. Eine manuelle Eingabe durch einen Bediener mittels der Eingabeeinrichtung 82 ist in diesem Fall nicht mehr zwingend erforderlich.

Der Aufnahmebehälter 90 kann insbesondere geschlossen ausgebildet sein und die Reinigungsmittelbehälter 30 und 31 umschließen, insbesondere gasdicht, wenn diese darin aufgenommen sind, um eine Geruchsbelästigung im Umfeld des Reinigungssystems 10 möglichst gering zu halten.

Die oben beschriebenen Ausführungsbeispiele von Reinigungssystemen 10 können insbesondere Reinigungskammern 14 mit einem Boden 20 umfassen, welcher trichterförmig ausgebildet ist, wobei der Reinigungsmitteleinlass 28 am in Schwerkraftrichtung tiefsten Punkt im Bereich der Reinigungskammer 14 angeordnet und ausgebildet ist.

Mit den oben beschriebenen Ausführungsbeispielen von Reinigungssystemen 10 lassen sich insbesondere verschiedene Arten von Reinigungsverfahren durchführen, also Verfahren zum Reinigen dreidimensionaler Objekte 12, welche durch Verfestigen, insbesondere schichtweise oder kontinuierlich, eines unter Einwirkung von Strahlung verfestigbaren Materials ausgebildet sind.

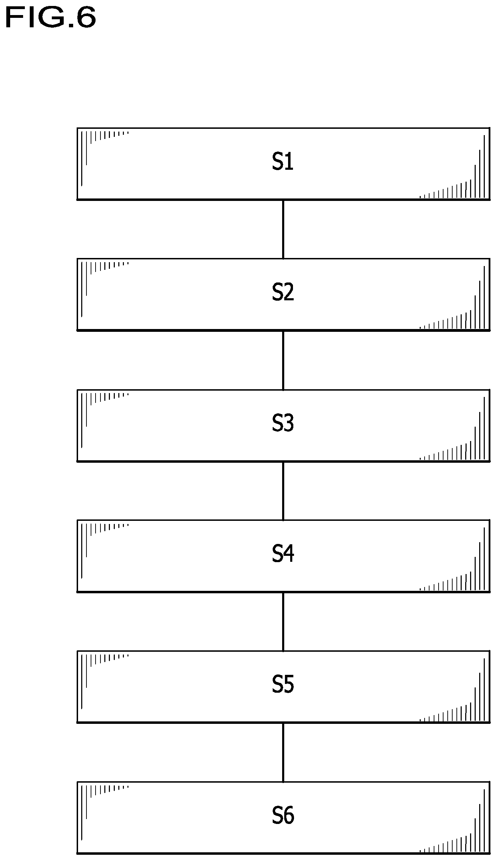

Figur 6 zeigt schematisch einen Ablauf eines Reinigungsverfahrens.

Beim Schritt S1 werden die Objekte 12 in die Reinigungskammer 14 eingebracht. Im nächsten Schritt S2 wird unkontaminiertes Reinigungsmittel 42 aus dem Reinigungsmittelbehälter 30 in die Reinigungskammer 14 gefördert. Beim Schritt 3 wird das Reinigungsmittel 42 in der Reinigungskammer 14 bewegt.

Nach einer vorgegebenen oder vorgebbaren Reinigungszeit wird beim Schritt S4 das Reinigungsmittel 42 aus der Reinigungskammer 14 zurück in den Reinigungsmittelbehälter 30 gefördert. Im Schritt S5 wird die Reinigungskammer 14 getrocknet und damit auch die darin aufgenommenen Objekte 12.

Damit ist ein Reinigungsgang und somit ein einfaches Reinigungsverfahren abgeschlossen.

Beim Schritt S6 können dann die gereinigten und getrockneten Objekte 12 aus der Reinigungskammer 14 entnommen werden.

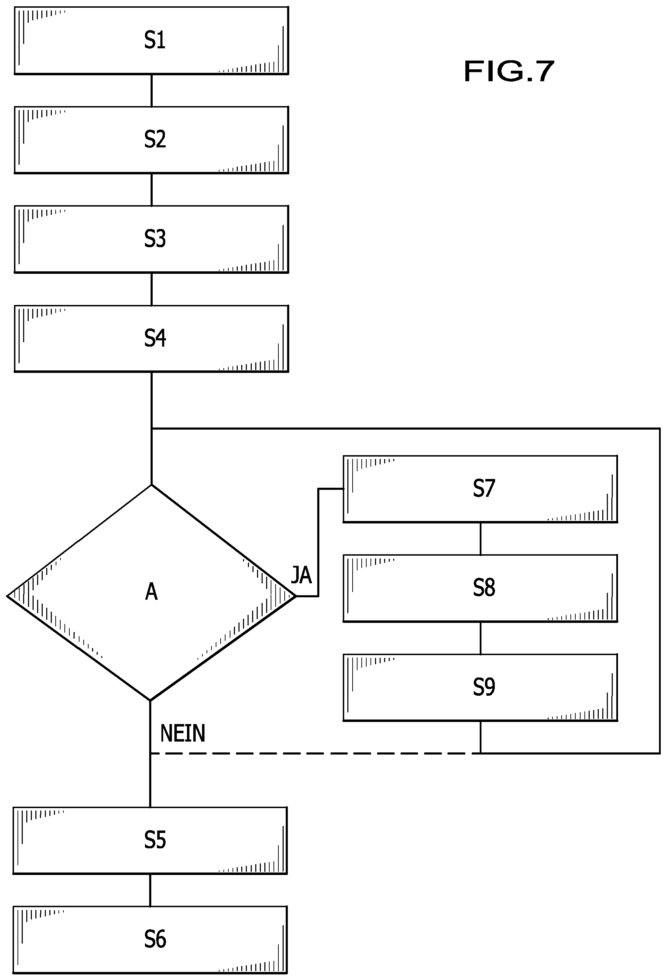

Eine weitere Variante eines Reinigungsverfahrens und deren Ablauf sind schematisch in Figur 7 dargestellt. Sie kann insbesondere Anwendung finden in Verbindung mit Reinigungssystemen 10 gemäß den im Zusammenhang mit den Figuren 4 und 5 beschriebenen vierten und fünften Ausführungsbeispielen von Reinigungssystemen 10.

Bei dem in Figur 7 dargestellten Ablauf entsprechen die Schritte S1 bis S6 den Schritten S1 bis S6 des in Figur 6 dargestellten Ablaufs.

Zwischen den Schritten S4 und S5 erfolgt beim Reinigungsverfahren gemäß Figur 7 eine Abfrage A.

Soll ein weiterer Reinigungsgang durchgeführt werden, ist also das Ergebnis der Abfrage A "JA", folgen statt der Schritte S5 und S6 zunächst die Schritte S7 bis S9. S7 entspricht dabei dem Schritt S2, Schritt S8 dem Schritt S3 und Schritt S9 dem Schritt S4. Allerdings wird im Schritt S7 das Reinigungsmittel 43 aus dem zweiten Reinigungsmittelbehälter 31 in die Reinigungskammer 14 gefördert. Beim Schritt S9 wird nach Ablauf der vorgesehenen Reinigungszeit das Reinigungsmittel 43 wieder in den Reinigungsmittelbehälter 31 zurückgefördert.

Beim Schritt S8 wird das in die Reinigungskammer 14 geförderte Reinigungsmittel 43 wie oben beschrieben für eine Verbesserung des Reinigungsergebnisses bewegt.

Nach Beendigung des Schritts S9 erfolgt wiederum eine Abfrage A. Alternativ kann auf den Schritt S9, falls nur zwei Reinigungsgänge durchgeführt werden sollen, der Ablauf des Reinigungsverfahrens direkt mit den Schritten S5 und S6 fortgesetzt werden. Dies ist in Figur 7 durch die gestrichelte Linie schematisch dargestellt.

Grundsätzlich kann eine beliebige Anzahl von Reinigungsmittelbehältern vorgesehen werden, die mit unterschiedlichen Reinigungsmitteln befüllt sind. Insbesondere kommen hier Isopropylalkohol und Methanol zum Einsatz.

Alle oben beschriebenen Reinigungssysteme 10 können ferner optional fluiddicht, insbesondere gasdicht, ausgebildet sein, um das Entweichen gasförmiger Lösungsmittel aus der Reinigungskammer 14 ganz oder zumindest weitgehend zu vermeiden.

Die beschriebenen Reinigungssysteme 10 sowie die beschriebenen Reinigungsverfahren ermöglichen eine einfache, sichere und insbesondere umweltschonende Reinigung dreidimensionaler Objekte 12, die durch Verfestigen, eines unter Einwirkung von Strahlung eines verfestigbaren Materials ausgebildet wurden.

### Bezugszeichenliste

- 10: Reinigungssystem
- 12: Objekt
- 14: Reinigungskammer
- 16: Behälter
- 18: Deckel
- 20: Boden
- 22: Pfeil
- 24: Trägerelement
- 26: Durchbrechung
- 28: Reinigungsmitteleinlass
- 30: Reinigungsmittelbehälter
- 31: Reinigungsmittelbehälter
- 32: Verbindungsleitung
- 34: Fördereinrichtung
- 35: Fördereinrichtung
- 36: Flüssigkeitspumpe
- 38: Ansaugstutzen
- 39: Ansaugstutzen
- 40: Öffnung
- 41: Öffnung
- 42: Reinigungsmittel
- 43: Reinigungsmittel
- 44: Verschluss
- 45: Verschluss
- 46: Bewegungseinrichtung
- 48: Propeller
- 50: Rotationsachse
- 52: Antriebseinrichtung
- 54: Bewegungselement
- 56: Trocknungseinrichtung
- 58: Verbindungsleitung
- 60: Einlass
- 62: Auslass
- 64: Umwälzgebläse
- 66: Entfeuchtungseinrichtung
- 68: Abluftbehandlungseinrichtung
- 70: Filter
- 72: Steuer- und/oder Regelungseinrichtung
- 74: Steuerleitung
- 75: Steuerleitung
- 76: Steuerleitung
- 78: Steuerleitung
- 80: Zeitvorgabeeinrichtung
- 82: Eingabeeinrichtung
- 84: Speicher
- 86: Anzeigeeinrichtung
- 88: T-Stück
- 90: Aufnahmebehälter
- 92: Speicherelement
- 93: Speicherelement
- 94: Ausleseeinrichtung
- 95: Ausleseeinrichtung
- 96: Datenleitung
- 97: Datenleitung

## Patentansprüche

1. Reinigungssystem (10) zum Reinigen mindestens eines dreidimensionalen Objekts (12), welches durch Verfestigen, insbesondere schichtweise oder kontinuierlich, eines unter Einwirkung von Strahlung verfestigbaren Materials ausgebildet ist, welches Reinigungssystem (10) eine Reinigungskammer (14) zum Aufnehmen des mindestens einen zu reinigenden dreidimensionalen Objekts (12) umfasst, wobei das Reinigungssystem (10) mindestens einen Reinigungsmittelbehälter (30, 31) mit unkontaminiertem Reinigungsmittel (42, 43) umfasst, wobei die Reinigungskammer (14) und der mindestens eine Reinigungsmittelbehälter (30, 31) fluidwirksam miteinander verbunden sind, wobei das Reinigungssystem (10) mindestens eine Fördereinrichtung (34, 35) umfasst zum Fördern von unkontaminiertem Reinigungsmittel (42, 43) aus dem mindestens einen Reinigungsmittelbehälter (30) in die Reinigungskammer (14) und zum Fördern von kontaminiertem Reinigungsmittels (42, 43) aus der Reinigungskammer (14) zurück in den mindestens einen Reinigungsmittelbehälter (30, 31) , wobei das Reinigungssystem (10) eine Bewegungseinrichtung (46) umfasst zum Bewegen des Reinigungsmittels (42, 43) in der Reinigungskammer (14), wobei die Bewegungseinrichtung (46) eine Rühreinrichtung und/oder eine strömungsmechanische Fluidstrahlerzeugungseinrichtung mit mindestens einer Düse umfasst zum Bewegen des Reinigungsmittels (42, 43), wobei die Rühreinrichtung und/oder eine strömungsmechanische Fluidstrahlerzeugungseinrichtung ausgebildet sind zum Erzeugen einer turbulenten Strömung in der mit Reinigungsmittel (42) befüllten Reinigungskammer (14).

2. Reinigungssystem nach Anspruch 1, **dadurch gekennzeichnet, dass** die Reinigungskammer (14) einen Boden (20) aufweist, dass in der Reinigungskammer (14) vom Boden (20) beabstandet ein Trägerelement (24) für das mindestens eine zu reinigende dreidimensionale Objekt (12) angeordnet ist und dass das Trägerelement (24) fluiddurchlässig ausgebildet ist.

3. Reinigungssystem nach einem der voranstehenden Ansprüche, **dadurch gekennzeichnet, dass** die Reinigungskammer (14) einen Reinigungsmitteleinlass (28) aufweist, der fluidwirksam mit der mindestens einen Fördereinrichtung (34, 35) verbunden ist,
wobei insbesondere
a) der Reinigungsmitteleinlass (28) am Boden (20) der Reinigungskammer (14) angeordnet ist
und/oder
b) der Boden (20) trichterförmig ausgebildet ist und dass der Reinigungsmitteleinlass (28) am in Schwerkraftrichtung tiefsten Punkt oder Bereich der Reinigungskammer (14) angeordnet oder ausgebildet ist.

4. Reinigungssystem nach einem der voranstehenden Ansprüche, **dadurch gekennzeichnet, dass** die Bewegungseinrichtung (46) zwischen dem Trägerelement (24) und dem Boden (20) angeordnet oder ausgebildet ist.

5. Reinigungssystem nach einem der voranstehenden Ansprüche, **dadurch gekennzeichnet, dass** die Reinigungskammer (14) oben in Bezug auf die Schwerkraftrichtung (22) durch einen abnehmbaren Deckel (18) verschlossen ist.

6. Reinigungssystem nach einem der voranstehenden Ansprüche, **dadurch gekennzeichnet, dass** das Reinigungssystem (10) eine Trocknungseinrichtung (56) umfasst,
wobei insbesondere die Trocknungseinrichtung (56)
a) im Deckel (18) angeordnet oder ausgebildet ist und/oder
b) ein Umwälzgebläse (64) umfasst zum Fördern von Gas aus der Reinigungskammer (14) zu einer Entfeuchtungseinrichtung (66) und von der Entfeuchtungseinrichtung (66) zurück in die Reinigungskammer (14).

7. Reinigungssystem nach einem der voranstehenden Ansprüche, **dadurch gekennzeichnet, dass** das Reinigungssystem (10) eine Abluftbehandlungseinrichtung (68) umfasst,
wobei insbesondere
a) die Abluftbehandlungseinrichtung (68) mindestens einen Filter (70), insbesondere einen Aktivkohlefilter, umfasst,
wobei insbesondere die Trocknungseinrichtung (56) den mindestens einen Filter (70) umfasst,
und/oder
b) die Abluftbehandlungseinrichtung (68) im Deckel (18) angeordnet oder ausgebildet ist.

8. Reinigungssystem nach einem der voranstehenden Ansprüche, **dadurch gekennzeichnet, dass** das Reinigungssystem (10) mindestens zwei Reinigungsmittelbehälter (30, 31) umfasst,
wobei insbesondere
a) jedem der mindestens zwei Reinigungsmittelbehälter (30, 31) eine eigene Fördereinrichtung (34, 35) zugeordnet ist und/oder
b) die mindestens zwei Reinigungsmittelbehälter (30, 31) unterschiedliche Reinigungsmittel (42, 43) enthalten
und/oder
c) das Reinigungssystem (10) ausgebildet ist, um mit dem Reinigungsmittel (42), welches in einem ersten der mindestens zwei Reinigungsmittelbehälter (30) enthalten ist, einen ersten Reinigungsvorgang durchzuführen und um mit dem Reinigungsmittel (43), welches in einem zweiten der mindestens zwei Reinigungsmittelbehälter (31) enthalten ist, einen zweiten Reinigungsvorgang durchzuführen,
wobei insbesondere das Reinigungssystem (10) ausgebildet ist, um nach dem zweiten Reinigungsvorgang einen dritten Reinigungsvorgang durchzuführen mit dem in den ersten Reinigungsmittelbehälter (30) nach dem ersten Reinigungsvorgang zurückgeförderten Reinigungsmittel (42) und um nach dem dritten Reinigungsvorgang einen vierten Reinigungsvorgang durchzuführen mit dem in den zweiten Reinigungsmittelbehälter (31) nach dem zweiten Reinigungsvorgang zurückgeförderten Reinigungsmittel (43).

9. Reinigungssystem nach einem der voranstehenden Ansprüche, **dadurch gekennzeichnet, dass** das Reinigungssystem (10) einen Aufnahmebehälter (90) für den mindestens einen Reinigungsmittelbehälter (30, 31) umfasst und dass der Aufnahmebehälter (90) mindestens einen mit der Reinigungskammer (14) fluidwirksam verbundenen Ansaugstutzen (38, 39) zum Einführen in den mindestens einen Reinigungsmittelbehälter (30, 31) umfasst.

10. Reinigungssystem nach einem der voranstehenden Ansprüche, **dadurch gekennzeichnet, dass** der mindestens eine Reinigungsmittelbehälter (30, 31) ein Speicherelement (92, 93) umfasst zum Speichern von mindestens einem das im mindestens einen Reinigungsmittelbehälter (30, 31) enthaltene Reinigungsmittel (42, 43) charakterisierenden Parameter, insbesondere Art und/oder Volumen des Reinigungsmittels und/oder eine chemische Eigenschaft und/oder physikalische Eigenschaft des Reinigungsmittels (42, 43),
wobei insbesondere
a) das Reinigungssystem (10) eine Ausleseeinrichtung (94, 95) umfasst zum Auslesen der im Speicherelement (92, 93) gespeicherten Parameter aus dem Speicherelement (92, 93),
wobei insbesondere die Ausleseeinrichtung (94, 95) am Aufnahmebehälter (90) angeordnet oder ausgebildet ist,
und/oder
b) das Speicherelement (92, 93) einen Barcode oder einen RFID-Chip umfasst.

11. Reinigungssystem nach einem der voranstehenden Ansprüche, **dadurch gekennzeichnet, dass** das Reinigungssystem (10)
a) eine Steuer- und/oder Regelungseinrichtung (72) zum Steuern und/oder Regeln des Reinigungssystems (10) umfasst,
wobei insbesondere die Steuer- und/oder Regelungseinrichtung
- eine Zeitvorgabeeinrichtung (80) umfasst zum Vorgeben einer Reinigungszeit, während der das Reinigungsmittel (42, 43) nach dem Fördern vom mindestens einen Reinigungsmittelbehälter (30, 31) und vor dem Zurückfördern in den mindestens einen Reinigungsmittelbehälter (30, 31) in der Reinigungskammer (14) verbleibt
und/oder
- ausgebildet ist zum automatischen Vorgeben der Reinigungszeit in Abhängigkeit des verfestigbaren Materials, aus dem das mindestens eine zu reinigende dreidimensionale Objekt (12) ausgebildet ist, und/oder in Abhängigkeit des Reinigungsmittels (42, 43)
und/oder
- ausgebildet ist, um die mindestens eine Fördereinrichtung (34, 35) in Abhängigkeit eines vorgegebenen maximalen Nutzungs- oder Kontaminationsgrads des Reinigungsmittels (42, 43) zu deaktivieren,
und/oder
b) eine Eingabeeinrichtung (82) umfasst zum Eingeben des Typs des verfestigbaren Materials, aus dem das mindestens eine zu reinigende dreidimensionale Objekt (12) ausgebildet ist,
und/oder
c) eine Anzeigeeinrichtung (86) umfasst zum Anzeigen von Betriebsparametern und/oder Betriebsmodi des Reinigungssystems (10) wobei insbesondere das Reinigungssystem (10) ausgebildet ist, um einem Nutzer einen Nutzungsgrad des Reinigungsmittels (42, 43) mit der Anzeigeeinrichtung (86) anzuzeigen,
und/oder
d) fluiddicht, insbesondere gasdicht, ausgebildet ist.

12. Reinigungssystem nach Anspruch 11, **dadurch gekennzeichnet, dass** die Steuer- und/oder Regelungseinrichtung (72) steuerungswirksam mit der mindestens einen Fördereinrichtung (34, 35) und/oder mit der mindestens einen Bewegungseinrichtung (46) und/oder mit der Trocknungseinrichtung (56) und/oder mit der Abluftbehandlungseinrichtung (68) und/oder mit der Ausleseeinrichtung (94, 95) und/oder mit der Eingabeeinrichtung (82) und/oder mit der Anzeigeeinrichtung (86) gekoppelt ist.

13. Verfahren zum Reinigen mindestens eines dreidimensionalen Objekts (12), welches durch Verfestigen, insbesondere schichtweise oder kontinuierlich, eines unter Einwirkung von Strahlung verfestigbaren Materials ausgebildet ist, bei welchem Verfahren mindestens ein Reinigungsgang durchgeführt wird, bei welchem mindestens einen Reinigungsgang unkontaminiertes Reinigungsmittel (42, 43) aus mindestens einem Reinigungsmittelbehälter (30, 31) in eine Reinigungskammer (14), in welcher das mindestens eine dreidimensionale Objekt (12) aufgenommen ist, gefördert und nach dem Reinigen des mindestens einen dreidimensionalen Objekts (12) aus der Reinigungskammer (14) wieder, insbesondere vollständig oder im Wesentlichen vollständig, in den mindestens einen Reinigungsmittelbehälter (30, 31) zurückgefördert wird, wobei das in die Reinigungskammer (14) geförderte Reinigungsmittel (42, 43) zum Reinigen des mindestens einen dreidimensionalen Objekts (12) in der Reinigungskammer (14) bewegt wird, wobei das Reinigungsmittel (42, 43) durch Rühren und/oder durch Erzeugen eines strömungsmechanischen Fluidstrahls bewegt wird zum Erzeugen einer turbulenten Strömung in der mit Reinigungsmittel (42) befüllten Reinigungskammer (14).

14. Verfahren nach Anspruch 13, **dadurch gekennzeichnet, dass**
a) zwei oder mehr Reinigungsgänge durchgeführt werden, wobei insbesondere bei jedem der zwei oder mehr Reinigungsgänge ein anderes Reinigungsmittel (42, 43) verwendet wird,
und/oder
b) nach jedem Reinigungsgang die Reinigungskammer (14) vollständig entleert wird
und/oder
c) das in die Reinigungskammer (14) geförderte Reinigungsmittel (42, 43) während einer Reinigungszeit in der Reinigungskammer (14) verbleibt,
wobei insbesondere die Reinigungszeit in Abhängigkeit des verfestigbaren Materials, aus dem das mindestens eine zu reinigende dreidimensionale Objekt (12) ausgebildet ist, und/oder in Abhängigkeit des Reinigungsmittels (42, 43) vorgegeben wird,
und/oder
d) nach dem mindestens einen Reinigungsgang, insbesondere nach dem letzten Reinigungsgang, die vom Reinigungsmittel (42, 43) entleerte Reinigungskammer (14) getrocknet wird,
wobei insbesondere beim Trocknen der Reinigungskammer (14) entweichende Geruchsstoffe herausgefiltert werden.

15. Verwendung eines Reinigungssystems (10) nach einem der Ansprüche 1 bis 12 zur Durchführung eines Verfahrens nach Anspruch 13 oder 14.

## Claims

1. Cleaning system (10) for cleaning at least one three-dimensional object (12) which is formed by solidification, in particular layer by layer or continuously, of a material which is solidifiable under the action of radiation, which cleaning system (10) comprises a cleaning chamber (14) for receiving the at least one three-dimensional object (12) to be cleaned, wherein the cleaning system (10) comprises at least one cleaning agent container (30, 31) containing uncontaminated cleaning agent (42, 43), wherein the cleaning chamber (14) and the at least one cleaning agent container (30, 31) are fluidically connected to one another, wherein the cleaning system (10) comprises at least one conveying device (34, 35) for conveying uncontaminated cleaning agent (42, 43) from the at least one cleaning agent container (30) into the cleaning chamber (14) and for conveying contaminated cleaning agent (42, 43) from the cleaning chamber (14) back into the at least one cleaning agent container (30, 31), wherein the cleaning system (10) comprises a movement device (46) for moving the cleaning agent (42, 43) in the cleaning chamber (14), wherein the movement device (46) comprises a stirring device and/or a fluid mechanical fluid jet generation device with at least one nozzle for moving the cleaning agent (42, 43), wherein the stirring device and/or a fluid mechanical fluid jet generation device are configured to generate a turbulent flow in the cleaning chamber (14) filled with cleaning agent (42).

2. Cleaning system in accordance with claim 1, **characterised in that** the cleaning chamber (14) has a base (20), **in that** a support element (24) for the at least one three-dimensional object (12) to be cleaned is arranged in the cleaning chamber (14) at a spacing from the base (20), and **in that** the support element (24) is of fluid-permeable configuration.

3. Cleaning system in accordance with any one of the preceding claims, **characterised in that** the cleaning chamber (14) has a cleaning agent inlet (28), which is fluidically connected to the at least one conveying device (34, 35),
wherein in particular
a) the cleaning agent inlet (28) is arranged on the base (20) of the cleaning chamber (14),
and/or
b) the base (20) is of funnel-shaped configuration, and **in that** the cleaning agent inlet (28) is arranged or formed at the lowest point or region of the cleaning chamber (14) in the direction of the force of gravity.

4. Cleaning system in accordance with any one of the preceding claims, **characterised in that** the movement device (46) is arranged or formed between the support element (24) and the base (20).

5. Cleaning system in accordance with any one of the preceding claims, **characterised in that** the cleaning chamber (14) is closed by a removable cover (18) at the top in relation to the direction of the force of gravity (22).

6. Cleaning system in accordance with any one of the preceding claims, **characterised in that** the cleaning system (10) comprises a drying device (56),
wherein in particular the drying device (56)
a) is arranged or formed in the cover (18)
and/or
b) comprises a recirculation fan (64) for conveying gas from the cleaning chamber (14) to a dehumidification device (66) and from the dehumidification device (66) back into the cleaning chamber (14).

7. Cleaning system in accordance with any one of the preceding claims, **characterised in that** the cleaning system (10) comprises an exhaust air treatment device (68),
wherein in particular
a) the exhaust air treatment device (68) comprises at least one filter (70), in particular an activated carbon filter,
wherein in particular the drying device (56) comprises the at least one filter (70),
and/or
b) the exhaust air treatment device (68) is arranged or formed in the cover (18).

8. Cleaning system in accordance with any one of the preceding claims, **characterised in that** the cleaning system (10) comprises at least two cleaning agent containers (30, 31),
wherein in particular
a) each of the at least two cleaning agent containers (30, 31) has associated therewith its own conveying device (34, 35) and/or
b) the at least two cleaning agent containers (30, 31) contain different cleaning agents (42, 43)
and/or
c) the cleaning system (10) is configured to perform a first cleaning process with the cleaning agent (42) which is contained in a first of the at least two cleaning agent containers (30) and to perform a second cleaning process with the cleaning agent (43) which is contained in a second of the at least two cleaning agent containers (31),
wherein in particular the cleaning system (10) is configured to perform, after the second cleaning process, a third cleaning process with the cleaning agent (42) conveyed back into the first cleaning agent container (30) after the first cleaning process and to perform, after the third cleaning process, a fourth cleaning process with the cleaning agent (43) conveyed back into the second cleaning agent container (31) after the second cleaning process.

9. Cleaning system in accordance with any one of the preceding claims, **characterised in that** the cleaning system (10) comprises a receiving container (90) for the at least one cleaning agent container (30, 31), and **in that** the receiving container (90) comprises at least one intake pipe (38, 39), which is fluidically connected to the cleaning chamber (14), for introduction into the at least one cleaning agent container (30, 31).

10. Cleaning system in accordance with any one of the preceding claims, **characterised in that** the at least one cleaning agent container (30, 31) comprises a memory element (92, 93) for storing at least one parameter characterising the cleaning agent (42, 43) contained in the at least one cleaning agent container (30, 31), in particular the type and/or volume of the cleaning agent and/or a chemical property and/or physical property of the cleaning agent (42, 43),
wherein in particular
a) the cleaning system (10) comprises a readout device (94, 95) for reading the parameters stored in the memory element (92, 93) from the memory element (92, 93),
wherein in particular the readout device (94, 95) is arranged or formed on the receiving container (90),
and/or
b) the memory element (92, 93) comprises a barcode or an RFID chip.

11. Cleaning system in accordance with any one of the preceding claims, **characterised in that** the cleaning system (10)
a) comprises a control device (72) for controlling the cleaning system (10),
wherein in particular the control device
- comprises a time setting device (80) for setting a cleaning time during which the cleaning agent (42, 43) remains in the cleaning chamber (14) after having been conveyed from the at least one cleaning agent container (30, 31) and before being conveyed back into the at least one cleaning agent container (30, 31)
and/or
- is configured to automatically set the cleaning time depending on the solidifiable material from which the at least one three-dimensional object (12) to be cleaned is formed, and/or depending on the cleaning agent (42, 43)
and/or
- is configured to deactivate the at least one conveying device (34, 35) depending on a predefined maximum degree of utilisation or contamination of the cleaning agent (42, 43),
and/or
b) comprises an input device (82) for inputting the type of solidifiable material from which the at least one three-dimensional object (12) to be cleaned is formed,
and/or
c) comprises a display device (86) for displaying operating parameters and/or operating modes of the cleaning system (10),
wherein in particular the cleaning system (10) is configured to display a degree of utilisation of the cleaning agent (42, 43) to a user by means of the display device (86),
and/or
d) is of fluid tight configuration, in particular gas tight configuration.

12. Cleaning system in accordance with claim 11, **characterised in that** the control device (72) is coupled in a control-operative manner to the at least one conveying device (34, 35) and/or to the at least one movement device (46) and/or to the drying device (56) and/or to the exhaust air treatment device (68) and/or to the readout device (94, 95) and/or to the input device (82) and/or to the display device (86).

13. Method for cleaning at least one three-dimensional object (12) which is formed by solidification, in particular layer by layer or continuously, of a material which is solidifiable under the action of radiation, in which method at least one cleaning operation is performed, in which at least one cleaning operation uncontaminated cleaning agent (42, 43) from at least one cleaning agent container (30, 31) is conveyed into a cleaning chamber (14), in which the at least one three-dimensional object (12) is received, and, following the cleaning of the at least one three-dimensional object (12), is conveyed back again from the cleaning chamber (14), in particular fully or substantially fully, into the at least one cleaning agent container (30, 31), wherein the cleaning agent (42, 43) conveyed into the cleaning chamber (14) is moved in the cleaning chamber (14) to clean the at least one three-dimensional object (12), wherein the cleaning agent (42, 43) is moved by stirring and/or by generating a fluid mechanical fluid jet for generating a turbulent flow in the cleaning chamber (14) filled with cleaning agent (42).

14. Method in accordance with claim 13, **characterised in that**
a) two or more cleaning operations are performed,
wherein in particular a different cleaning agent (42, 43) is used in each of the two or more cleaning operations,
and/or
b) the cleaning chamber (14) is fully emptied after each cleaning operation
and/or
c) the cleaning agent (42, 43) conveyed into the cleaning chamber (14) remains in the cleaning chamber (14) for a cleaning time,
wherein in particular the cleaning time is predefined depending on the solidifiable material from which the at least one three-dimensional object (12) to be cleaned is formed, and/or depending on the cleaning agent (42, 43),
and/or
d) after the at least one cleaning operation, in particular after the last cleaning operation, the cleaning chamber (14) emptied of the cleaning agent (42, 43) is dried,
wherein in particular odours escaping during the drying of the cleaning chamber (14) are filtered out.

15. Use of a cleaning system (10) in accordance with any one of claims 1 to 12 to perform a method in accordance with claim 13 or 14.

## Revendications

1. Système de nettoyage (10) destiné à nettoyer au moins un objet tridimensionnel (12), formé par solidification, en particulier couche par couche ou en continu, d'un matériau solidifiable sous l'effet d'un rayonnement, ledit système de nettoyage (10) comprenant une chambre de nettoyage (14) destinée à recevoir ledit au moins un objet tridimensionnel (12) à nettoyer, le système de nettoyage (10) comprenant au moins un réservoir de produit de nettoyage (30, 31) contenant un produit de nettoyage non contaminé (42, 43), la chambre de nettoyage (14) et ledit au moins un réservoir de produit de nettoyage (30, 31) étant reliés fluidiquement, le système de nettoyage (10) comprenant au moins un dispositif de transport (34, 35) pour transporter le produit de nettoyage non contaminé (42, 43) depuis ledit au moins un réservoir de produit de nettoyage (30) vers la chambre de nettoyage (14) et pour transporter le produit de nettoyage contaminé (42, 43) depuis la chambre de nettoyage (14) en retour vers ledit au moins un réservoir de produit de nettoyage (30, 31), le système de nettoyage (10) comprenant un moyen de déplacement (46) pour déplacer le produit de nettoyage (42, 43) dans la chambre de nettoyage (14), le moyen de déplacement (46) comprenant un dispositif d'agitation et/ou un dispositif de génération de jet de fluide hydrodynamique comportant au moins une buse pour déplacer le produit de nettoyage (42, 43), le dispositif d'agitation et/ou le dispositif de génération de jet de fluide hydrodynamique étant configurés pour générer un écoulement turbulent dans la chambre de nettoyage (14) remplie de produit de nettoyage (42).

2. Système de nettoyage selon la revendication 1, **caractérisé en ce que** la chambre de nettoyage (14) présente un fond (20), **en ce qu'**un élément de support (24) pour ledit au moins un objet tridimensionnel (12) à nettoyer est disposé dans la chambre de nettoyage (14) à distance du fond (20), et **en ce que** l'élément de support (24) est réalisé de manière perméable au fluide.

3. Système de nettoyage selon l'une des revendications précédentes, **caractérisé en ce que** la chambre de nettoyage (14) présente une entrée de produit de nettoyage (28) reliée fluidiquement avec ledit au moins un dispositif de transport (34, 35),
dans lequel, en particulier,
a) l'entrée de produit de nettoyage (28) est disposée au niveau du fond (20) de la chambre de nettoyage (14),
et/ou
b) le fond (20) est réalisé sous forme d'entonnoir et l'entrée de produit de nettoyage (28) est disposée ou réalisée au point le plus bas ou dans la zone la plus basse de la chambre de nettoyage (14) dans le sens de la gravité.

4. Système de nettoyage selon l'une des revendications précédentes, **caractérisé en ce que** le moyen de déplacement (46) est disposé ou réalisé entre l'élément de support (24) et le fond (20).

5. Système de nettoyage selon l'une des revendications précédentes, **caractérisé en ce que** la chambre de nettoyage (14) est fermée à sa partie supérieure, par rapport au sens de la gravité (22), par un couvercle amovible (18).

6. Système de nettoyage selon l'une des revendications précédentes, **caractérisé en ce que** le système de nettoyage (10) comprend un dispositif de séchage (56),
dans lequel, en particulier, le dispositif de séchage (56)
a) est disposé ou réalisé dans le couvercle (18)
et/ou
b) comprend un ventilateur de recirculation (64) destiné à transporter un gaz depuis la chambre de nettoyage (14) vers un dispositif de déshumidification (66) et depuis le dispositif de déshumidification (66) en retour vers la chambre de nettoyage (14).

7. Système de nettoyage selon l'une des revendications précédentes, **caractérisé en ce que** le système de nettoyage (10) comprend un dispositif de traitement d'air évacué (68),
dans lequel, en particulier,
a) le dispositif de traitement d'air évacué (68) comprend au moins un filtre (70), en particulier un filtre à charbon actif,
dans lequel, en particulier, le dispositif de séchage (56) comprend ledit au moins un filtre (70),
et/ou
b) le dispositif de traitement d'air évacué (68) est disposé ou réalisé dans le couvercle (18).

8. Système de nettoyage selon l'une des revendications précédentes, **caractérisé en ce que** le système de nettoyage (10) comprend au moins deux réservoirs de produit de nettoyage (30, 31),
dans lequel, en particulier,
a) à chacun des au moins deux réservoirs de produit de nettoyage (30, 31) est associé un dispositif de transport (34, 35) qui lui est propre et/ou
b) les au moins deux réservoirs de produit de nettoyage (30, 31) contiennent des produits de nettoyage (42, 43) différents
et/ou
c) le système de nettoyage (10) est configuré pour effectuer une première opération de nettoyage avec le produit de nettoyage (42) contenu dans un premier des au moins deux réservoirs de produit de nettoyage (30), et pour effectuer une deuxième opération de nettoyage avec le produit de nettoyage (43) contenu dans un deuxième des au moins deux réservoirs de produit de nettoyage (31),
dans lequel, en particulier, le système de nettoyage (10) est configuré pour effectuer, après la deuxième opération de nettoyage, une troisième opération de nettoyage avec le produit de nettoyage (42) renvoyé dans le premier réservoir de produit de nettoyage (30) après la première opération de nettoyage et, après la troisième opération de nettoyage, pour effectuer une quatrième opération de nettoyage avec le produit de nettoyage (43) renvoyé dans le deuxième réservoir de produit de nettoyage (31) après la deuxième opération de nettoyage.

9. Système de nettoyage selon l'une des revendications précédentes, **caractérisé en ce que** le système de nettoyage (10) comprend un récipient de réception (90) pour ledit au moins un réservoir de produit de nettoyage (30, 31) et **en ce que** le récipient de réception (90) comprend au moins une tubulure d'aspiration (38, 39) reliée fluidiquement à la chambre de nettoyage (14), destinée à être introduite dans ledit au moins un réservoir de produit de nettoyage (30, 31).

10. Système de nettoyage selon l'une des revendications précédentes, **caractérisé en ce que** ledit au moins un réservoir de produit de nettoyage (30, 31) comprend un élément de mémoire (92, 93) pour mémoriser au moins un paramètre caractérisant le produit de nettoyage (42, 43) contenu dans ledit au moins un réservoir de produit de nettoyage (30, 31), en particulier le type et/ou le volume du produit de nettoyage et/ou une propriété chimique et/ou une propriété physique du produit de nettoyage (42, 43),
dans lequel, en particulier,
a) le système de nettoyage (10) comprend un dispositif de lecture (94, 95) pour lire les paramètres mémorisés dans l'élément de mémoire (92, 93) à partir de l'élément de mémoire (92, 93),
dans lequel, en particulier, le dispositif de lecture (94, 95) est disposé ou réalisé sur le récipient de réception (90),
et/ou
b) l'élément de mémoire (92,93) comprend un code à barres ou une puce RFID.

11. Système de nettoyage selon l'une des revendications précédentes, **caractérisé en ce que** le système de nettoyage (10)
a) comprend un dispositif de commande et/ou de régulation (72) destiné à commander et/ou réguler le système de nettoyage (10), dans lequel, en particulier, le dispositif de commande et/ou de régulation
- comprend un dispositif de définition de temps (80) destiné à définir un temps de nettoyage pendant lequel le produit de nettoyage (42, 43), après son transport depuis ledit au moins un réservoir de produit de nettoyage (30, 31) et avant son renvoi vers ledit au moins un réservoir de produit de nettoyage (30, 31), demeure dans la chambre de nettoyage (14)
et/ou
- est configuré pour définir automatiquement le temps de nettoyage en fonction du matériau solidifiable à partir duquel ledit au moins un objet tridimensionnel (12) à nettoyer est formé, et/ou en fonction du produit de nettoyage (42, 43)
et/ou
- est configuré pour désactiver ledit au moins un dispositif de transport (34, 35) en fonction d'un degré maximal d'utilisation ou de contamination prédéfini du produit de nettoyage (42, 43),
et/ou
b) comprend un dispositif de saisie (82) pour saisir le type de matériau solidifiable à partir duquel ledit au moins un objet tridimensionnel (12) à nettoyer est formé,
et/ou
c) comprend un dispositif d'affichage (86) pour afficher des paramètres de fonctionnement et/ou des modes de fonctionnement du système de nettoyage (10),
dans lequel, en particulier, le système de nettoyage (10) est configuré pour afficher à un utilisateur, au moyen du dispositif d'affichage (86), un degré d'utilisation du produit de nettoyage (42, 43),
et/ou
d) est réalisé étanche aux fluides, en particulier étanche aux gaz.

12. Système de nettoyage selon la revendication 11, **caractérisé en ce que** le dispositif de commande et/ou de régulation (72) est couplé de manière efficace pour la commande avec ledit au moins un dispositif de transport (34, 35) et/ou avec ledit au moins un moyen de déplacement (46) et/ou avec le dispositif de séchage (56) et/ou avec le dispositif de traitement d'air évacué (68) et/ou avec le dispositif de lecture (94, 95) et/ou avec le dispositif de saisie (82) et/ou avec le dispositif d'affichage (86).

13. Procédé de nettoyage d'au moins un objet tridimensionnel (12), formé par solidification, en particulier couche par couche ou en continu, d'un matériau solidifiable sous l'effet d'un rayonnement, ledit procédé effectuant au moins un cycle de nettoyage, dans lequel, pour ledit au moins un cycle de nettoyage, un produit de nettoyage non contaminé (42, 43) est transporté depuis au moins un réservoir de produit de nettoyage (30, 31) vers une chambre de nettoyage (14) dans laquelle ledit au moins un objet tridimensionnel (12) est reçu, et, après le nettoyage dudit au moins un objet tridimensionnel (12), est à nouveau transporté depuis la chambre de nettoyage (14), en particulier complètement ou pratiquement complètement, en retour dans ledit au moins un réservoir de produit de nettoyage (30, 31), le produit de nettoyage (42, 43) transporté dans la chambre de nettoyage (14) étant déplacé pour nettoyer ledit au moins un objet tridimensionnel (12) dans la chambre de nettoyage (14), le produit de nettoyage (42, 43) étant déplacé par agitation et/ou par génération d'un jet de fluide hydrodynamique afin de générer un écoulement turbulent dans la chambre de nettoyage (14) remplie de produit de nettoyage (42).

14. Procédé selon la revendication 13, **caractérisé en ce que**
a) deux cycles de nettoyage ou plus sont effectués,
dans lesquels, en particulier, lors de chacun des deux cycles de nettoyage ou plus, un produit de nettoyage (42, 43) différent est utilisé,
et/ou
b) après chaque cycle de nettoyage, la chambre de nettoyage (14) est complètement vidée,
et/ou
c) le produit de nettoyage (42, 43) transporté dans la chambre de nettoyage (14) demeure dans la chambre de nettoyage (14) pendant un temps de nettoyage,
dans lequel, en particulier, le temps de nettoyage est défini en fonction du matériau solidifiable à partir duquel ledit au moins un objet tridimensionnel (12) à nettoyer est formé et/ou en fonction du produit de nettoyage (42, 43),
et/ou
d) après ledit au moins un cycle de nettoyage, en particulier après le dernier cycle de nettoyage, la chambre de nettoyage (14) vidée du produit de nettoyage (42, 43) est séchée,
dans lequel, en particulier, lors du séchage de la chambre de nettoyage (14), les substances odorantes qui s'échappent sont filtrées.

15. Utilisation d'un système de nettoyage (10) selon l'une des revendications 1 à 12 pour mettre en œuvre un procédé selon la revendication 13 ou la revendication 14.
